# EUROPÄISCHE PATENTSCHRIFT

(11) **EP 3 948 981 B1**
(45) Veröffentlichungstag und Bekanntmachung des Hinweises auf die Patenterteilung: **06.05.2026**
(21) Anmeldenummer: 20718539.8
(22) Anmeldetag: 25.03.2020
(51) Int. Cl.: H01M 4/04, H01M 4/139, H01M 10/04, H01M 10/0585, H01M 10/052, B23K 26/38, H01M 50/46

(54) **VORRICHTUNG UND VERFAHREN ZUM BEREITSTELLEN VON ELEKTRODENSTRÄNGEN UND ZUM HERSTELLEN VON ELEKTRODENANORDNUNGEN**
APPARATUS AND METHOD FOR PROVIDING ELECTRODE STRINGS AND FOR PRODUCING ELECTRODE ARRANGEMENTS
DISPOSITIF ET PROCÉDÉ POUR FOURNIR DES BRINS D'ÉLECTRODES ET POUR PRODUIRE DES ARRANGEMENTS D'ÉLECTRODES

(30) Priorität: 27.03.2019 DE 102019002178
(43) Veröffentlichungstag der Anmeldung: 09.02.2022
(73) Patentinhaber: Grob-Werke GmbH & Co. KG, 87719 Mindelheim (DE)
(72) Erfinder: GLÜCK, Moritz, 82362 Weilheim (DE); PAUL, Jürgen, 87739 Loppenhausen (DE); SZAUNIG, Joachim, 89335 Ichenhausen (DE)
(74) Vertreter: KASTEL Patentanwälte PartG mbB
(86) Internationale Anmeldenummer: PCT/DE2020/100240
(87) Internationale Veröffentlichungsnummer: WO 2020/192845

(56) Entgegenhaltungen:
- DE-A1- 102017 216 133
- DE-A1- 102017 216 138
- US-A1- 2014 020 239
- US-A1- 2015 033 547

## Beschreibung

Die Erfindung betrifft eine Elektrodenstrangbereitstellvorrichtung zum Bereitstellen eines Elektrodenstrangs zwecks Herstellens einer Elektrodenanordnung. Weiter betrifft die Erfindung ein Elektrodenstrangbereitstellverfahren zum Bereitstellen eines Elektrodenstrangs zwecks Herstellens einer Elektrodenanordnung.

Die Erfindung liegt auf dem Gebiet der Fertigung von Elektrodenanordnungen und insbesondere von Batteriezellen und Zellverbünden hierfür. Mehr insbesondere liegt die Erfindung auf dem technischen Gebiet von Großserienanlagen zur Großserienherstellung von Batteriezellen. Insbesondere sollen Batteriezellen zur Verwendung in der Elektromobilität, insbesondere Batteriezellen für die Hauptstromversorgung von Elektrofahrzeugen, wie insbesondere Personenkraftwagen und Lastkraftwagen, in Großserie gefertigt werden.

Zum technologischen Hintergrund der Erfindung wird insbesondere auf folgende Literaturstellen verwiesen:
[1] EP 2 866 293 B1
[2] EP 2 557 626 B1
[3] KR 100832801 B1
[4] DE 10 2007 057 129 B4
[5] EP 3 415 265 A1
[6] DE 10 2017 131 345 A1
[7] DE 10 2017 216 133 A1
[8] US 2014/020239 A1
[9] US 2015/033547 A1
[10] DE 10 2017 216 138 A1

Aus [7] und [10] sind Verfahren und Vorrichtungen zum Bereitstellen von Elektrodensträngen durch Schneiden von Elektroden auf einem Träger, der als Vakuumtrommel mit radial beweglichen Trägersegmenten ausgebildet ist und Positionieren der so vereinzelten Elektroden auf einer Separatorbahn bekannt.

Aus [8] und [9] geht das Schneiden Elektroden mittels Ausstanzens mit vorgeformten Stanzwerkzeugen hervor.

Die Erfindung hat sich zur Aufgabe gestellt, hinsichtlich Anpassbarkeit, Präzision und Prozesssicherheit verbesserte Vorrichtungen und Verfahren zur Verwendung bei einer Großserienherstellung von Elektrodenanordnungen, insbesondere für Batteriezellen, zur Verfügung zu stellen.

Zum Lösen dieser Aufgabe schafft die Erfindung Vorrichtungen und Verfahren, wie in den unabhängigen Ansprüchen wiedergegeben.

Vorteilhafte Ausgestaltungen sind Gegenstand der Unteransprüche.

Die Erfindung schafft gemäß einem ersten Aspekt davon eine Elektrodenstrangbereitstellvorrichtung zum Bereitstellen eines Elektrodenstrangs zwecks Herstellens einer Elektrodenanordnung mit:
einer Elektrodenbahnbereitstelleinrichtung zum Bereitstellen eines bahnförmigen Elektrodensubstrats;
einer Separatorbahnbereitstelleinrichtung zum Bereitstellen einer Separatorbahn;
einer Elektrodenvereinzelungseinrichtung zum Vereinzeln des Elektrodensubstrats zu einzelnen Elektrodenstücken, welche eine Elektrodensubstratfördereinrichtung mit einem in einer Förderrichtung beweglichen Träger zum Fördern des Elektrodensubstrats und eine Schneideinrichtung zum Durchschneiden des Elektrodensubstrats auf dem Träger entlang einer Schneidkurve, um ein Elektrodenstück von dem bahnförmigen Elektrodensubstrat während des Förderns abzuschneiden, aufweist; und
einer Positionier- und Fixiereinrichtung zum Positionieren und Fixieren der Elektrodenstücke auf der Separatorbahn;
wobei die Schneidkurve der Schneideinrichtung einen Seitenkanten-Schneidkurvenbereich zum Schneiden einer in Förderrichtung verlaufenden Seitenkante des Elektrodenstückes und wenigstens einen Schnittkanten-Schneidkurvenbereich zum Schneiden einer sich quer zur Förderrichtung verlaufenden Schnittkante des Elektrodenstückes aufweist.

Es ist erfindungsgemäß vorgesehen, dass die Schneidkurve eine durchgängige Schneidkurve ist.

Es ist bevorzugt, dass die Schneidkurve der Schneideinrichtung einen ersten Seitenkanten-Schneidkurvenbereich zum Schneiden einer ersten Seitenkante des Elektrodenstücks und einen zweiten Seitenkanten-Schneidkurvenbereich zum Schneiden einer zweiten Seitenkante des Elektrodenstücks aufweist, wobei der Schnittkanten-Schneidkurvenbereich zwischen den Seitenkanten-Schneidkurvenbereichen angeordnet ist.

Es ist bevorzugt, dass der Seitenkanten-Schneidkurvenbereich oder wenigstens einer von mehreren Seitenkanten-Schneidkurvenbereichen zum Ausschneiden einer Kontaktfahne des Elektrodenstücks ausgebildet ist.

Es ist bevorzugt, dass der Seitenkanten-Schneidkurvenbereich oder wenigstens einer von mehreren Seitenkanten-Schneidkurvenbereichen einen U-förmigen Bereich zum Schneiden einer Kontur einer an der ersten Kante vorstehenden Kontaktfahne aufweist.

Es ist bevorzugt, dass der Seitenkanten-Schneidkurvenbereich oder wenigstens einer von mehreren Seitenkanten-Schneidkurvenbereichen wenigstens einen in einer in Förderrichtung gerichteten Richtung geradlinig verlaufenden Bereich aufweist.

Es ist erfindungsgemäß vorgesehen, dass der Seitenkanten-Schneidkurvenbereich oder wenigstens einer von mehreren Seitenkanten-Schneidkurvenbereichen von einem stationären Standpunkt aus betrachtet bogenförmig in den Schnittkanten-Schneidkurvenbereich übergeht.

Es ist bevorzugt, dass der Schnittkanten-Schneidkurvenbereich einen von der Bewegung des Trägers abhängigen Verlauf hat.

Es ist bevorzugt, dass der Schnittkanten-Schneidkurvenbereich von einem stationären Standpunkt aus betrachtet schräg zur Förderrichtung verläuft.

Es ist bevorzugt, dass der Schnittkanten-Schneidkurvenbereich länger als der wenigstens eine Seitenkanten-Schneidkurvenbereich ist.

Erfindungsgemäß umfasst die Schneideinrichtung wenigstens eine Lasereinheit zum Erzeugen eines Schneidstrahls. Die Lasereinheit weist vorzugsweise wenigstens einen Pulslaser zum Erzeugen eines gepulsten Laserstrahls als Schneidstrahl auf.

Vorzugsweise umfasst die Schneideinrichtung wenigstens eine Ablenkeinheit für einen Schneidstrahl.

Erfindungsgemäß umfasst die Schneideinrichtung eine Schneidsteuereinheit zum Steuern des Schneidens entsprechend der Schneidkurve. Mit anderen Worten ist die Schneidsteuereinheit dazu ausgebildet, die Schneideinrichtung anzusteuern, das Schneiden entsprechend der Schneidkurve durchzuführen. Hierzu weist die Schneidsteuereinheit insbesondere einen Speicher mit darin gespeicherten entsprechenden maschinenlesbaren Steueranweisungen auf.

Vorzugsweise umfasst die Schneideinrichtung wenigstens einen Galvanometerantrieb für eine Ablenkeinheit.

Vorzugsweise umfasst die Schneideinrichtung eine erste und eine zweite Ablenkeinheit für einen Schneidstrahl, die in Förderrichtung nebeneinander oder hintereinander angeordnet sind.

Es ist bevorzugt, dass der Träger mehrere Trägersegmente aufweist, die jeweils eine Auflagefläche zum Aufnehmen mindestens eines Elektrodenstücks aufweisen und in einer in Förderrichtung gerichteten ersten Richtung und in einer senkrecht zu der Auflagefläche gerichteten zweiten Richtung relativ zueinander beweglich sind.

Die Auflagefläche des jeweiligen Trägersegments ist insbesondere zum Aufnehmen eines Elektrodenstücks oder zwei oder mehrerer nebeneinander angeordneter Elektrodenstücke ausgebildet.

Bei einer Ausführung wird jeweils ein Elektrodenstück abgeschnitten. Bei anderen Ausführungen werden parallel nebeneinander zwei oder mehr Elektrodenstücke geschnitten und vereinzelt.

Es ist bevorzugt, dass die Elektrodensubstratfördereinrichtung eine Saugeinrichtung zum Fixieren des Elektrodensubstrats auf dem Träger mittels Unterdrucks aufweist.

Es ist bevorzugt, dass der Träger als Unterdruckwalze ausgebildet ist.

Es ist bevorzugt, dass die Elektrodensubstratfördereinrichtung eine Hafteinrichtung zum Fixieren des Elektrodensubstrats auf dem Träger mittels vorzugsweise schaltbarer Klebehaftung aufweist. Die Hafteinrichtung ist insbesondere eine schaltbare Hafteinrichtung wie sie in der Literaturstelle [6] beschrieben und gezeigt ist.

Es ist bevorzugt, dass der Träger walzenförmig mit einer sich in Umfangsrichtung erstreckenden Anordnung radial beweglicher Trägersegmente ausgebildet ist.

Es ist bevorzugt, dass der Träger wenigstens ein Steuerelement zum relativen Bewegen der Trägersegmente abhängig von der Position oder Stellung des Trägers aufweist.

Es ist bevorzugt, dass der Träger eine lösbare Befestigungseinrichtung zum Befestigen und bedarfsweisen Austauschen der Trägersegmente aufweist.

Es ist bevorzugt, dass der Träger eine Vorspanneinrichtung zum Vorspannen der Trägersegmente in eine Bewegungsrichtung aufweist.

Es ist bevorzugt, dass der Träger starre Plattenelemente, insbesondere aus Metall, als Trägersegmente aufweist. Vorzugsweise sind die Plattenelemente als Kassetten ausgebildet. Vorzugsweise weisen die Plattenelemente jeweils wenigstens eine Druckkammer auf, die mit Unterdruck/Überdruck versorgbar ist.

Es ist bevorzugt, dass der Träger Trägersegmente mit einer Reihe von Ansaugöffnungen, die entsprechend der Kontur der Elektrodenstücke angeordnet sind, aufweist. Vorzugsweise sind die Ansaugöffnungen mit der wenigstens einen Druckkammer verbunden.

Es ist bevorzugt, dass der Träger wenigstens eine erste Kurvenscheibe an einem ersten Bereich einer umlaufenden Bewegungsbahn der Trägersegmente und wenigstens eine zweite Kurvenscheibe an einem zweiten Bereich der Bewegungsbahn der Trägersegmente aufweist, wobei die Trägersegmente mit den Kurvenscheiben in Kontakt sind, um deren Relativbewegung zu steuern.

Es ist bevorzugt, dass der Träger wenigstens einen Mitnehmer pro Trägersegment aufweist, der mit dem Trägersegment in Eingriff ist, so dass das Trägersegment durch den Mitnehmer in Förderrichtung antreibbar ist und relativ zu dem Trägersegment in der zweiten Richtung beweglich ist.

Es ist bevorzugt, dass der Träger Trägersegmente mit einer schaltbaren Hafteinrichtung aufweist.

Es ist bevorzugt, dass die Positionier- und Fixiereinrichtung eine Aktivierungseinrichtung zum Aktivieren eines Bindermaterials der Separatorbahn oder eine Klebeauftragseinrichtung zum Auftragen eines Klebers aufweist.

Es ist bevorzugt, dass die Positionier- und Fixiereinrichtung eine Gegenwalze zum Aufpressen der Separatorbahn auf den Träger aufweist.

Eine bevorzugte Verwendung findet die Erfindung in einer Elektrodenanordnungsherstellvorrichtung zum Herstellen von Elektrodenanordnungen aus einer ersten Elektrode, einer zweiten Elektrode und Separatorschichten dazwischen, umfassend:
eine erste Elektrodenstrangbereitstellvorrichtung nach einer der voranstehenden Ausgestaltungen zum Bereitstellen eines ersten Elektrodenstrangs mit einer ersten Separatorbahn und daran fixierten ersten Elektrodenstücken,
eine zweite Elektrodenstrangbereitstellvorrichtung nach einer der voranstehenden Ausgestaltungen zum Bereitstellen eines zweiten Elektrodenstrangs mit einer zweiten Separatorbahn und daran fixierten zweiten Elektrodenstücken,
eine Positionier- und Fügeeinheit zum relativen Positionieren und Zusammenfügen der Elektrodenstränge, so dass die ersten und die zweiten Elektrodenstücke zueinander ausgerichtet übereinander liegen, und
eine Zellverbundvereinzelungseinrichtung zum Vereinzeln der zusammengefügten Elektrodenanordnungen zu einzelnen Zellverbünden.

Gemäß einem weiteren Aspekt schafft die Erfindung ein Elektrodenstrangbereitstellverfahren zum Bereitstellen eines Elektrodenstrangs zwecks Herstellens einer Elektrodenanordnung, umfassend:
a) Bereitstellen eines bahnförmigen Elektrodensubstrats;
b) Bereitstellen einer Separatorbahn;
c) Vereinzeln des Elektrodensubstrats zu einzelnen Elektrodenstücken, umfassend
   c1) Fördern des Elektrodensubstrats auf einem Träger und
   c2) Abschneiden eines Elektrodenstück von dem bahnförmigen Elektrodensubstrat während des Förderns durch Schneiden wenigstens zweier Kanten der Kontur des Elektrodenstücks auf dem Träger entlang einer Schneidkurve,
d) Positionieren und Fixieren der Elektrodenstücke auf der Separatorbahn.

Es ist erfindungsgemäß vorgesehen, dass Schritt c2) umfasst:
Schneiden einer in Förderrichtung verlaufenden Seitenkante des Elektrodenstückes und Schneiden einer sich quer zur Förderrichtung verlaufenden Schnittkante des Elektrodenstückes in einem Schneidvorgang mit der Schneidkurve.

Es ist bevorzugt, dass Schritt c2) umfasst:
Schneiden einer ersten Seitenkante, der Schnittkante und einer zweiten Seitenkante des Elektrodenstücks in einem Schneidvorgang mit der Schneidkurve.

Es ist erfindungsgemäß vorgesehen, dass Schritt c2) umfasst:
Schneiden entlang der durchgängig ausgebildeten Schneidkurve. Vorzugsweise wird das Schneiden entlang der durchgängigen Schneidkurve kontinuierlich durchgeführt.

Es ist bevorzugt, dass das Schneiden wenigstens einer Seitenkante des Elektrodenstücks den Schritt umfasst:
Ausschneiden einer Kontaktfahne des Elektrodenstücks.

Es ist bevorzugt, dass das Schneiden wenigstens einer Seitenkante des Elektrodenstücks den Schritt umfasst:
Schneiden einer U-förmigen Kontur einer an der Seitenkante vorstehenden Kontaktfahne.

Es ist bevorzugt, dass das Schneiden wenigstens einer Seitenkante des Elektrodenstücks den Schritt umfasst:
Schneiden entlang eines in einer in Förderrichtung gerichteten Richtung geradlinig verlaufenden Bereichs der Schneidkurve.

Es ist erfindungsgemäß vorgesehen, dass das Schneiden wenigstens einer Seitenkante des Elektrodenstücks den Schritt umfasst:
von einem stationären Standpunkt aus betrachtet bogenförmiges Übergehen in das Schneiden der Schnittkante.

Es ist gemäß einer ersten Alternative des erfindungsgemäßen Verfahrens vorgesehen, dass das Schneiden wenigstens einer Seitenkante des Elektrodenstücks den Schritt umfasst:
kontinuierliches Durchführen des Schneidvorganges durch kontinuierliches Durchfahren der Schneidkurve mit einem Schneidstrahl.

Es ist gemäß einer zweiten Alternative des erfindungsgemäßen Verfahrens vorgesehen, dass das Schneiden wenigstens einer Seitenkante des Elektrodenstücks den Schritt umfasst:
Durchführen des Schneidvorganges durch Durchfahren eines Teilabschnitts der Schneidkurve, der einen Übergang zwischen einer Seitenkante und der Schnittkante umfasst, mit einem mittels einer ersten Ablenkeinheit abgelenkten Schneidstrahl und anschließendes Durchfahren des verbleibenden Teilabschnitts der Schneidkurve mit einem mittels einer zweiten Ablenkeinheit abgelenkten Schneidstrahl.

Es ist bevorzugt, dass das Schneiden der Schnittkante abhängig von der Bewegung des Trägers verläuft.

Es ist bevorzugt, dass das Schneiden der Schnittkante von einem stationären Standpunkt aus betrachtet schräg zur Förderrichtung verläuft.

Es ist bevorzugt, dass das Schneiden der Schnittkante länger als das Schneiden der wenigstens einen Seitenkante verläuft. Vorzugsweise ist die Schnittkante länger als die erste und zweite Seitenkante.

Es ist bevorzugt, dass Schritt c2) umfasst:
Erzeugen wenigstens eines Schneidstrahls mittels wenigstens einer Lasereinheit, insbesondere mit einem Pulslaser.

Es ist bevorzugt, dass Schritt c2) umfasst:
Ablenken eines Schneidstrahls mittels wenigstens einer Ablenkeinheit.

Es ist bevorzugt, dass das Schneiden der Schnittkante umfasst: Steuern des Schneidens entsprechend einer vorgegebenen, insbesondere kontinuierlichen Schneidkurve mittels einer Steuereinheit.

Es ist bevorzugt, dass das Schneiden der Schnittkante umfasst: Antreiben einer Ablenkeinheit zum Ablenken eines Schneidstrahls mittels eines Galvanoantriebs.

Es ist bevorzugt, dass das Schneiden der Schnittkante umfasst: Ablenken wenigstens eines Schneidstrahls mittels einer ersten und einer zweiten Ablenkeinheit, die in Förderrichtung nebeneinander angeordnet sind, um mittels der Ablenkeinheiten die insbesondere kontinuierliche Schneidkurve zu durchfahren.

Es ist bevorzugt, dass Schritt c2) umfasst:
Ablenken wenigstens eines Schneidstrahls mittels einer ersten und einer zweiten Ablenkeinheit, die in Förderrichtung hintereinander angeordnet sind, um mittels der Ablenkeinheiten Elektroden gleichzeitig oder zeitlich überlappend herauszuschneiden.

Es ist bevorzugt, dass Schritt c1) umfasst:
c1a) Auflegen von voneinander durch Schritt c2) zu trennenden Bereichen des Elektrodensubstrats auf an mehreren Trägersegmenten des Trägers gebildeten Auflageflächen, wobei die Trägersegmente in einer in Förderrichtung gerichteten ersten Richtung und in einer senkrecht zu der Auflagefläche gerichteten zweiten Richtung relativ zueinander beweglich sind, wobei das Auflegen und Schritt c2) mit zueinander angenäherten benachbarten Trägersegmenten durchgeführt wird und die benachbarten Trägersegmente mit daran fixierten Elektrodenstücken zum Durchführen von Schritt d) in die erste und/oder zweite Richtung auseinander bewegt werden.

Vorzugsweise umfasst das Elektrodenstrangbereitstellverfahren den Schritt:
Fixieren des Elektrodensubstrats auf dem Träger mittels Unterdrucks.

Vorzugsweise umfasst das Elektrodenstrangbereitstellverfahren den Schritt:
Fördern des Elektrodensubstrats und der nach Schritt c2) vereinzelten Elektrodenstücke mittels einer Unterdruckwalze als Träger.

Vorzugsweise umfasst das Elektrodenstrangbereitstellverfahren den Schritt:
Fixieren des Elektrodensubstrats auf dem Träger mittels einer vorzugsweisen schaltbaren Hafteinrichtung oder Klebehaftung. Insbesondere arbeitet die Hafteinrichtung gemäß dem in der Literaturstelle [6] beschriebenen Prinzip.

Vorzugsweise umfasst das Elektrodenstrangbereitstellverfahren den Schritt:
Bewegen der Trägersegmente in Förderrichtung durch Drehen des walzenförmig mit einer sich in Umfangsrichtung erstreckenden Anordnung der Trägersegmente ausgebildeten Trägers, wobei das Relativbewegen der Trägersegmente von Schritt c1a) durch radiales Bewegen der Trägersegmente erfolgt.

Vorzugsweise umfasst das Elektrodenstrangbereitstellverfahren den Schritt:
Steuern des relativen Bewegens der Trägersegmente abhängig von der Position oder der Stellung des Trägers.

Vorzugsweise umfasst das Elektrodenstrangbereitstellverfahren den Schritt:
bedarfsweises Austauschen der Trägersegmente bei Verschleiß oder zum Anpassen an eine zu schneidende Kontur der Elektrodenstücke.

Vorzugsweise umfasst das Elektrodenstrangbereitstellverfahren den Schritt:
Vorspannen der Trägersegmente in eine Bewegungsrichtung des jeweiligen Trägersegments.

Vorzugsweise umfasst das Elektrodenstrangbereitstellverfahren den Schritt:
Vorsehen starrer Plattenelemente, insbesondere aus Metall, als Trägersegmente. Insbesondere werden kassettenförmige Plattenelemente, insbesondere mit wenigstens einer Druckkammer, verwendet.

Vorzugsweise umfasst das Elektrodenstrangbereitstellverfahren den Schritt:
Ansaugen der Elektrodenstücke durch eine Reihe von Ansaugöffnungen, die entsprechend der Kontur der Elektrodenstücke angeordnet sind. Insbesondere wird ein Randbereich der Elektrodenstücke durch diese Reihe von Ansaugöffnungen angesogen. Damit wird eine sichere Fixierung der Elektrode erreicht.

Vorzugsweise umfasst das Elektrodenstrangbereitstellverfahren den Schritt:
Führen der Trägersegmente über wenigstens eine erste Kurvenscheibe an einem ersten Bereich einer umlaufenden Bewegungsbahn der Trägersegmente und wenigstens eine zweite Kurvenscheibe an einemzweiten Bereich der Bewegungsbahn der Trägersegmente, um über den Verlauf der Kurvenscheiben die Bewegung der Trägersegmente zu steuern.

Vorzugsweise umfasst das Elektrodenstrangbereitstellverfahren weiter den Schritt: Einstellen eines Abstands zwischen den Elektrodenstücken auf dem Elektrodenstrang durch Einstellen der Position wenigstens einer der Kurvenscheiben.

Vorzugsweise umfasst das Elektrodenstrangbereitstellverfahren den Schritt:
Antreiben der Trägersegmente durch jeweilige Mitnehmer in Förderrichtung und Bewegen der Trägersegmente relativ zu dem jeweiligen Mitnehmer in der zweiten Richtung.

Es ist bevorzugt, dass Schritt d) umfasst:
Aktivieren eines Bindermaterials der Separatorbahn oder Auftragen eines Klebers.

Es ist bevorzugt, dass Schritt d) umfasst:
Aufpressen der Separatorbahn auf den Träger mittels einer Gegenwalze.

Eine bevorzugte Verwendung findet das Elektrodenstrangbereitstellverfahren gemäß der Erfindung in einem Elektrodenanordnungsherstellverfahren zum Herstellen von Elektrodenanordnungen aus einer ersten Elektrode, einer zweiten Elektrode und Separatorschichten dazwischen, umfassend: Bereitstellen eines ersten Elektrodenstrangs mit einer ersten Separatorbahn und daran fixierten ersten Elektrodenstücken mittels eines Elektrodenstrangbereitstellverfahrens nach einer der voranstehenden Ausgestaltungen,
Bereitstellen eines zweiten Elektrodenstrangs mit einer zweiten Separatorbahn und daran fixierten zweiten Elektrodenstücken mittels eines Elektrodenstrangbereitstellverfahrens nach einer der voranstehenden Ausgestaltungen,
relatives Positionieren und Zusammenfügen der Elektrodenstränge, so dass die ersten und die zweiten Elektrodenstücke zueinander ausgerichtet übereinander liegen und
Vereinzeln der zusammengefügten Elektrodenanordnungen zu einzelnen Zellverbünden.

Vorzugsweise wird das Elektrodenanordnungsherstellverfahren mit der Elektrodenanordnungsherstellvorrichtung durchgeführt. Vorzugsweise ist die Elektrodenanordnungsherstellvorrichtung zum Durchführen des Elektrodenanordnungsherstellverfahrens ausgebildet. Vorzugsweise weist die Elektrodenanordnungsherstellvorrichtung eine Steuerung auf, die dazu ausgebildet ist, die Elektrodenanordnungsherstellvorrichtung zum Durchführen der Schritte des Elektrodenanordnungsherstellverfahrens anzusteuern. Die Erfindung betrifft auch ein Computerprogrammprodukt mit maschinenlesbaren Steueranweisungen, die, wenn in eine Steuerung der Elektrodenanordnungsherstellvorrichtung geladen, die Elektrodenanordnungsherstellvorrichtung zum Durchführen des Elektrodenanordnungsherstellverfahrens ansteuern.

Vorzugsweise wird das Elektrodenstrangbereitstellverfahren gemäß einer der voranstehenden Ausgestaltungen mit der Elektrodenstrangbereitstellvorrichtung gemäß einer der voranstehenden Ausgestaltungen durchgeführt. Vorzugsweise ist die Elektrodenstrangbereitstellvorrichtung gemäß einer der voranstehenden Ausgestaltungen zum Durchführen des Elektrodenstrangbereitstellverfahrens gemäß einer der voranstehenden Ausgestaltungen ausgebildet. Vorzugsweise weist die Elektrodenstrangbereitstellvorrichtung gemäß einer der voranstehenden Ausgestaltungen eine Steuerung auf, die dazu ausgebildet ist, die Elektrodenstrangbereitstellvorrichtung gemäß einer der voranstehenden Ausgestaltungen zum Durchführen der Schritte des Elektrodenstrangbereitstellverfahrens gemäß einer der voranstehenden Ausgestaltungen anzusteuern. Die Erfindung betrifft auch ein Computerprogrammprodukt mit maschinenlesbaren Steueranweisungen, die, wenn in eine Steuerung der Elektrodenstrangbereitstellvorrichtung gemäß einer der voranstehenden Ausgestaltungen geladen, die Elektrodenstrangbereitstellvorrichtung zum Durchführen des Elektrodenstrangbereitstellverfahrens gemäß einer der voranstehenden Ausgestaltungen ansteuern.

Im Folgenden werden einige Vorteile sowie technische Effekte bevorzugter Ausgestaltungen der Erfindung näher erläutert.

Bevorzugte Ausgestaltungen der Erfindung betreffen eine kombinierte Schneid- und Fixiereinheit zur Herstellung von Zellverbünden. Insbesondere ist eine solche zur Verwendung in einer Großserienanlage zur Herstellung von Batteriezellen zu verwenden. Bevorzugtes Einsatzgebiet der Batteriezellen ist die Elektromobilität.

Zum Zwecke der Zellassemblierung, insbesondere bei der Massenproduktion von Zellstacks, wird bevorzugt auf kontinuierlich laufende Verfahren zur Herstellung des Zellstacks zurückgegriffen. Dabei sind aktuell v.a. die Verfahren "Stack & Folding", "Wickelverfahren" und das "Zellverbund stapeln" am weitesten verbreitet.

Kern der Verfahren "Stack & Folding" und "Zellverbund stapeln" ist, dass Elektroden und Separatoren miteinander verbunden werden. Diese Verbindung wird bei bevorzugten Ausgestaltungen durch ein Laminierverfahren oder ein Klebeverfahren erzielt. Durch diesen Schritt ist es möglich, Zellstacks durch Übereinanderstapeln mehrerer Zellverbünde herzustellen.

Basis für ein Laminieren ist ein Separator mit einer Aktivschicht, die unter Einfluss z.B. von Wärme und Druck adhäsive Eigenschaften entwickelt. Somit kann die Elektrode durch gezieltes Auflegen und anschließendes Laminieren auf dem Separator fixiert werden.

Beim Kleben wird ein Klebstoff (z.B. aus PVDF) auf den Separator oder die Elektrode aufgetragen, wodurch ebenfalls eine Fixierung der Elektrode auf dem Separator erzielt wird.

Bei Ausgestaltungen der Erfindung, die mit einem der vorgenannten Verfahren arbeiten, wird die Elektrode zuvor vereinzelt und dann auf dem durchgängigen Separator platziert.

Beim "Stack & Folding" oder auch "Z-Stapeln" wird der Separator kontinuierlich z-förmig gefaltet. Durch Auflegen der Elektroden zwischen die einzelnen Falten entsteht so der Zellstack.

Bei Ausgestaltungen nach dem Prinzip "Zellverbund stapeln" werden die Elektroden auf dem Separator platziert. Führt man anschließend die beiden Stränge (Anode - Separator bzw. Kathode - Separator) zusammen und laminiert oder verklebt man diese, so erhält man einen Zellverbund aus Anode - Separator - Kathode - Separator. Dabei sind die beiden Separatoren allerdings noch durchgängig. Anschließend werden die Zellverbünde durch Trennen der beiden Separatorbahnen (oder nur einer Separatorbahn, wenn die andere bereits vor dem Zusammenführen getrennt wurde) vereinzelt. Durch Aufstapeln der einzelnen Zellverbünde erhält man dann einen Zellstack.

Durch das Vorsehen einer kombinierten Schneid- und Fixiereinheit ist es nicht notwendig, dass die Elektrodenbänder oder Elektrodenstränge Merkmale zur Positionierung oder ähnliches enthalten. Auch werden im Gegensatz zu [1] keinerlei Formhälften zur Fixierung des Separators benötigt.

Bei der herzustellenden Elektrodenanordnung wird vorzugsweise zur Bereitstellung der elektrochemischen Funktion einer Batteriezelle eine definierte Reihenfolge, insbesondere Separator - Anode - Separator - Kathode, eingehalten. Vorzugsweise werden Mono-Zellen aus je einmal Anode, Kathode und zweimal Separator erzeugt und anschließend zu einem kompletten Zellstack aufgestapelt.

Vorzugsweise wird zur Ablenkung eines als Schneidstrahl eingesetzten Lasers (ausschließlich) wenigstens ein Galvanometerscanner eingesetzt. Durch ein Mitberücksichtigen der Fördergeschwindigkeit kann das Schneiden über den Verlauf einer Förderstrecke erfolgen. Es sind Scangeschwindigkeiten in der Größenordnung von 5 m/s ausreichend. Für die Strahlquelle sind bei Verwendung gepulster Systeme maximale Leistungen von bis zu 1 kW ausreichend. Vorzugsweise wird ein Pikosekundenlaser eingesetzt. Pikosekundenlaser sind spezielle Laser, die ultrakurze Lichtimpulse im Bereich von Pikosekunden (Impulsdauer zwischen 10⁻⁹ und 10⁻¹² s) erzeugen. Die kurze Impulsdauer der Laser führt zu einer guten Schneidwirkung. Zudem bringt der Laser bei dem Schneiden weniger Hitze ein, wodurch das Risiko einer Beeinträchtigung des Elektrodenmaterials minimiert wird.

Bei bevorzugten Ausgestaltungen der Erfindung erfolgt ein spezieller Schnittprozess, bei dem - im Gegensatz zu bisherigen Verfahren, wie z.B. aus [5] bekannt - mehrere Trennschritte auf dem Träger, beispielsweise einer Walze, durchgeführt werden. Bei bevorzugten Ausgestaltungen ist ein kompletter Konturschnitt der Elektrode vorgesehen. Bei derzeit bevorzugten praktischen Ausgestaltungen wird ein Lasersystem aus einem gepulsten Laser und einem 3D-Scanner mit galvanometrischen Achsen aufgebaut. Bei anderen Lösungen werden andere Laser, z.B. ein CW-Laser eingesetzt, der aber mit einer speziellen Ablenkeinheit kombiniert wird, die ein Schneiden nicht nur einer Kante, sondern mehrerer Kanten des Elektrodenstücks auf dem beispielsweise als Walze ausgebildeten Trägers ermöglicht. Insbesondere sehen bevorzugte Ausgestaltungen der Erfindung spezielle Schnittstrategien vor. Insbesondere wird das Ausschneiden eines Ableiterfähnchens (Kontaktfahne) und der Trennschnitt in einem gemeinsamen Schnittprozess und mit der gleichen Schneideinrichtung durchgeführt. Bevorzugte Ausgestaltungen sehen weiter eine besonders vorteilhafte Möglichkeit des Auflegens der vereinzelten Elektrodenstücke auf den Separator vor.

Besonders bevorzugte Ausgestaltungen der Erfindung basieren auf dem Verfahrensprinzip "Zellverbund stapeln". Bei bisherigen nach diesem Verfahrensprinzip arbeitenden Lösungsansätzen werden die Elektroden in unterschiedlichen mehreren Schritten konturiert und vereinzelt - Notching & Trennschnitt.

Nachdem die Elektrodenbeschichtung relativ sensibel auf mechanische Einflüsse reagiert, ist bei bevorzugen Ausgestaltungen der Erfindung vorgesehen, dass die Elektrode möglichst in einem Schnitt vereinzelt und auf dem Separator platziert werden kann.

Zudem ist einer der wesentlichen Einflussfaktoren auf die Leistungsfähigkeit einer Batteriezelle die Positioniergenauigkeit der einzelnen Lagen übereinander. Bei den bevorzugten Ausgestaltungen der Erfindung ermöglichen eine hohe Positioniergenauigkeit und Wiederholgenauigkeit des Schneide- und Positionierprozesses eine höhere Energiedichte in der Zelle. Hintergrund hierfür ist, dass der Überstand des Separators als Isolator zwischen den Elektroden durch eine höhere Positioniergenauigkeit minimiert werden kann. Der dadurch reduzierte Bauraum entspricht einer identischen Zelle mit höherer Energiedichte.

Bei Ausgestaltungen einer Station zur Elektrodenanordnungsherstellung werden die Einzelkomponenten der Station so angeordnet, dass das Zusammenführen der beiden Einzelstränge möglichst direkt erfolgt.

Besonders bevorzugte Ausgestaltungen der Erfindung ermöglichen ein kombiniertes Verfahren zur Herstellung einzelner Zellverbünde, umfassend je eine Anode und Kathode sowie zwei Separatoren.

Bevorzugte Ausgestaltungen des Elektrodenanordnungsherstellverfahrens beinhalten die Einzelprozesse Vereinzeln, Transportieren und Positionieren und Fixieren der Elektroden auf zwei Materialbahnen aus Separatormaterial, sowie das nachgelagerte Zusammenfahren der beiden Materialbahnen. Durch abschließendes Trennen erhält man die einzelnen Zellverbünde.

Somit können mit diesem Prozess einzelne Zellverbünde hergestellt werden. Stapelt man diese nun mit einer zusätzlichen Schicht (entweder nur Separator oder Kombination Separator - Elektrode - Separator) übereinander, so erhält man einen kompletten Zellstack.

Das Vereinzeln erfolgt in dem Prozess vorzugsweise mittels Laserverfahren. Es ist aber auch denkbar, den Laser durch ein Rotationswerkzeug zu ersetzen. Somit kann das Vereinzeln auch mittels mechanischen Schnitts erfolgen.

Das Fixieren der Elektrode kann hierbei sowohl durch Kleben (z.B. mittels Auftragens einer PVDF-Lösung), als auch mittels Laminierens (Erwärmen der Aktivschicht eines laminierfähigen Separators) erfolgen.

Ein Vorteil bevorzugter Ausgestaltungen der Erfindung liegt darin, dass die Elektroden nach dem Freischneiden direkt auf den Separator aufgelegt werden können. Somit entfallen Handlingsschritte, wodurch die Gefahr von Beschädigungen der Elektroden und auch ein Positionsverlust vor dem Auflegen auf den Separator reduziert werden können. Zudem können höhere Prozessgeschwindigkeiten realisiert werden, da alle Prozesse kontinuierlich laufen.

Ausführungsbeispiele werden im Folgenden anhand der beigefügten Zeichnungen näher erläutert. Darin zeigt:
Fig. 1 eine schematische Übersichtsdarstellung einer Elektrodenanordnungsherstellvorrichtung nach einem Ausführungsbeispiel der Erfindung mit einer ersten und einer zweiten Elektrodenstrangbereitstelleinrichtung;
Fig. 2 eine perspektivische Ansicht eines Ausführungsbeispiels einer der Elektrodenstrangbereitstelleinrichtungen der Elektrodenanordnungsherstellvorrichtung nach Fig. 1;
Fig. 3 eine perspektivische Ansicht eines Ausführungsbeispiels einer Positionier- und Fügeeinheit und einer Zellverbundvereinzelungseinrichtung der Elektrodenanordnungsherstellvorrichtung von Fig. 1;
Fig. 4 eine Draufsicht auf einen Abschnitt einer Elektrodenbahn, die in der Elektrodenstrangbereitstelleinrichtung bearbeitet wird;
Fig. 5 eine Darstellung wie in Fig. 4, wobei eine Schneidkurve mit Schnittkanten zur Erzeugung der Elektroden durch Abschneiden von Elektrodenstücken von der Elektrodenbahn angedeutet ist;
Fig. 6 eine Draufsicht auf einen von der Elektrodenstrangbereitstelleinrichtung bereitgestellten Elektrodenstrang, der auf einer Separatorbahn fixierte Elektrodenstücke aufweist;
Fig. 7 eine Seitenansicht auf einen ersten Elektrodenstrang in Form eines Anodenstrangs, der von der ersten Elektrodenstrangbereitstelleinrichtung bereitgestellt wird, einen zweiten Elektrodenstrang in Form eines Kathodenstrangs, der von der zweiten Elektrodenstrangbereitstelleinrichtungen bereitgestellt wird, bei der Zusammenführung durch die Positionier- und Fixiereinheit;
Fig. 8 eine Seitenansicht der Elektrodenstränge von Fig. 7 im verbundenen Zustand;
Fig. 9 eine perspektivische Ansicht einer durch die Elektrodenanordnungsherstellvorrichtung hergestellten Elektrodenanordnung am Beispiel eines Zellstacks für eine Batterie;
Fig. 10 eine Ansicht auf die abgewickelte Schneidkurve;
Fig. 11 eine Schemadarstellung eines Ausführungsbeispiels der grundlegenden Schnittbewegung entlang der Schneidkurve;
Fig. 12 eine perspektivische Darstellung eines ersten Ausführungsbeispiels einer Elektrodenvereinzelungseinrichtung mit einem ersten Ausführungsbeispiel einer Schneideinrichtung zum Durchschneiden des Elektrodensubstrats auf einem Träger entlang der Schneidkurve;
Fig. 13 eine Schemadarstellung der Schnittstrategie mit dem ersten Ausführungsbeispiel der Schneideinrichtung;
Fig. 14 eine perspektivische Darstellung eines zweiten Ausführungsbeispiels der Elektrodenvereinzelungseinrichtung mit einem zweiten Ausführungsbeispiel der Schneideinrichtung;
Fig. 15 eine Schemadarstellung der Schnittstrategie mit dem zweiten Ausführungsbeispiel der Schneideinrichtung;
Fig. 16 eine perspektivische Darstellung eines dritten Ausführungsbeispiels der Elektrodenvereinzelungseinrichtung mit einem dritten Ausführungsbeispiel der Schneideinrichtung;
Fig. 17 eine Schemadarstellung der Schnittstrategie mit dem dritten Ausführungsbeispiel der Schneideinrichtung;
Fig. 18 eine perspektivische Schnittdarstellung eines Ausführungsbeispiels einer Elektrodensubstratfördereinrichtung der Elektrodenstrangbereitstelleinrichtung mit einem in einer Förderrichtung beweglichen Träger zum Fördern des Elektrodensubstrats;
Fig. 19 eine perspektivische Ansicht eines Trägersegments des Trägers von Fig. 18;
Fig. 20 eine vergrößerte, teils geschnittene Detailansicht eines Bereichs des Trägersegments von Fig. 19;
Fig. 21 eine perspektivische Ansicht eines Bereichs des gemäß dem gezeigten Ausführungsbeispiels als Unterdruckwalze ausgebildeten Trägers mit den als Kassetten ausgebildeten Trägersegmenten;
Fig. 22 einen Schnitt durch einen äußeren Umfangsbereich des Trägers von Fig. 21, wobei Trägersegmente und zugeordnete Mitnehmer im Eingriff miteinander dargestellt sind;
Fig. 23 eine vergrößerte Seitenansicht auf eine Reihe von in Umfangsrichtung aufeinanderfolgend angeordneter Trägersegmente in einer radialen Stellung mit minimalem Abstand zum Durchführen des Schneidvorganges;
Fig. 24 eine vergrößerte Detailansicht des umrahmten Kästchens aus Fig. 23, um die Elektrodenbahn und den resultierenden Schnittspalt zwischen den Trägersegmenten zu illustrieren;
Fig. 25 eine perspektivische Ansicht des Trägers und einer Gegenwalze als Teil einer bei der Elektrodenstrangbereitstelleinrichtung vorgesehenen Positionier- und Fixiereinrichtung zum Positionieren und Fixieren der Elektrodenstücke auf der Separatorbahn gemäß einem Ausführungsbeispiel;
Fig. 26 einen Schnitt durch die Anordnung des Trägers und der Gegenwalze von Fig. 25;
Fig. 27 einen Teilbereich des Trägers mit einem Übergang zwischen einem ersten und einem zweiten Kurvenscheibenelement zum Steuern einer Bewegung der Trägersegmente;
Fig. 28 eine Explosionsdarstellung eines Beispiels eines Aufbaus einer Luftführung für die Unterdruckwalze, die ein Beispiel für den Träger darstellt;
Fig. 29 einen Schnitt durch einen Steuerdorn und eine Welle des Aufbaus von Fig. 28; und
Fig. 30 einen Schnitt durch die Unterdruckwalze.

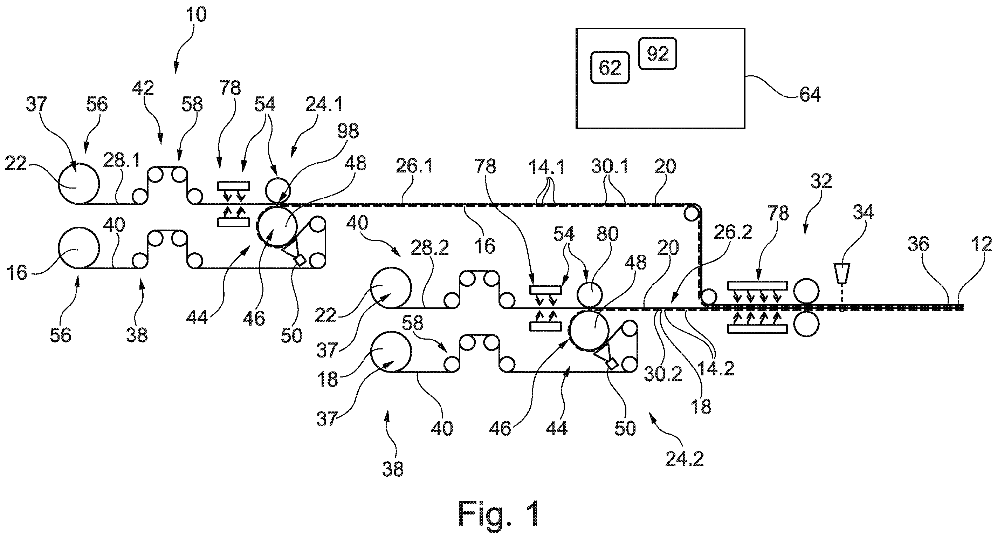

Fig. 1 zeigt eine Elektrodenanordnungsherstellvorrichtung 10 zum Herstellen von Elektrodenanordnungen 12. Eine Elektrodenanordnung 12 ist aus einer ersten Elektrode 14.1, beispielsweise einer Anode 16, einer zweiten Elektrode 14.2, beispielsweise einer Kathode 18, und Separatorschichten 20 aus einem Material, das als Separator 22 wirkt, dazwischen ausgebildet. Die Elektrodenanordnung 12 kann z.B. in einer Batteriezelle (nicht dargestellt) einer Batterie für ein Elektrofahrzeug eingesetzt werden. Dementsprechend wird die Elektrodenanordnungsherstellvorrichtung 10 insbesondere in einer Großserienanlage zur Herstellung von Elektrofahrzeug-Batterien verwendet.

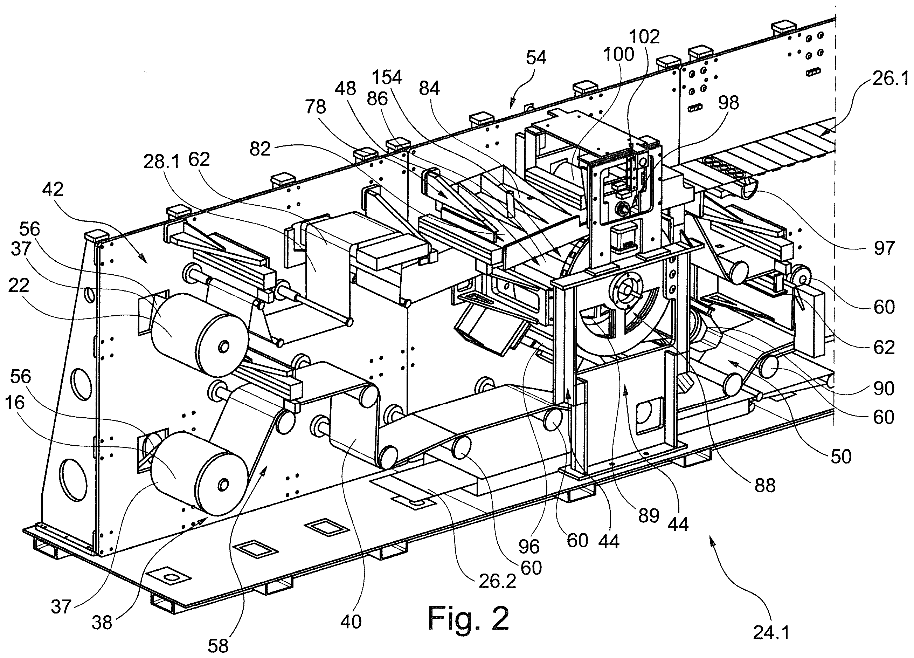

Die Elektrodenanordnungsherstellvorrichtung 10 weist eine erste Elektrodenstrangbereitstellvorrichtung 24.1 und eine zweite Elektrodenstrangbereitstellvorrichtung 24.2 auf. Ein Ausführungsbeispiel für die Elektrodenstrangbereitstellvorrichtungen 24.1, 24.2 ist in Fig. 2 dargestellt und wird hiernach noch näher erläutert.

Die erste Elektrodenstrangbereitstellvorrichtung 24.1 ist zum Bereitstellen eines ersten Elektrodenstrangs 26.1 ausgebildet. Der erste Elektrodenstrang 26.1 weist eine erste Separatorbahn 28.1 aus dem als Separator 22 wirkenden Material und an der ersten Separatorbahn 28.1 fixierte erste Elektrodenstücke 30.1 auf, die dann die erste Elektroden 14.1 der Elektrodenanordnung 12 bilden.

Die zweite Elektrodenstrangbereitstellvorrichtung 24.2 ist zum Bereitstellen eines zweiten Elektrodenstrangs 26.2 ausgebildet. Der zweite Elektrodenstrang 26.2 weist eine zweite Separatorbahn 28.2 aus dem als Separator 22 wirkenden Material und daran fixierte zweite Elektrodenstücke 30.2 auf, die dann die zweiten Elektroden 14.2 der Elektrodenanordnung 12 bilden.

Für die gezeigte in Fig. 1 und 2 gezeigte Ausführung, in der die ersten Elektroden 14.1 die Anoden und die Elektroden 14.2 die Anoden bilden, kann der erste Elektrodenstrang 26.1 auch als Anodenstrang bezeichnet werden, und der zweite Elektrodenstrang 26.2 kann als Kathodenstrang bezeichnet werden.

Die Elektrodenanordnungsherstellvorrichtung 10 weist weiter eine Positionier- und Fügeeinheit 32 und eine Zellverbundvereinzelungseinrichtung 34 auf.

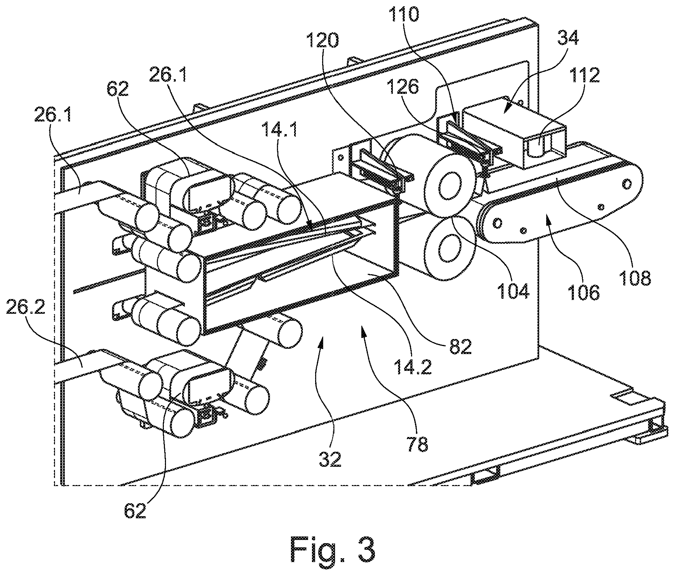

Die Positionier- und Fügeeinheit 32 ist zum relativen Positionieren und Zusammenfügen der Elektrodenstränge 26.1, 26.2 ausgebildet. Hierzu wird die Positionier- und Fügeeinheit 32 so angesteuert, dass die Elektrodenstränge 26.1, 26.2 mit den daran fixierten Elektrodenstücken 30.1, 30.2 so zusammengefügt werden, dass die ersten und die zweiten Elektrodenstücke 30.1, 30.2 zueinander ausgerichtet übereinander liegen. Dadurch entstehen Elektrodenanordnungen 12, die noch über die durchgängigen Separatorbahnen 28.1, 28.2 zusammengefügt sind. Ein Ausführungsbeispiel der Positionier- und Fügeeinheit 32 ist in Fig. 3 dargestellt und wird hiernach noch näher erläutert.

Die Zellverbundvereinzelungseinrichtung 34 ist zum Vereinzeln der zusammengefügten Elektrodenanordnungen 12 zu einzelnen Zellverbünden 36 ausgebildet, die dann als Batteriezelle verwendet werden können. Ein Ausführungsbeispiel der Zellverbundvereinzelungseinrichtung ist ebenfalls in Fig. 3 dargestellt und wird hiernach noch näher erläutert.

Mit dem in Fig. 1 dargestellten Ausführungsbeispiel der Elektrodenanordnungsherstellvorrichtung 10 lässt sich ein Elektrodenanordnungsherstellverfahren durchführen, bei dem aus auf Coils 37 bereitgestellten bahnförmigen Materialien für Anoden 16, Kathoden 18 und Separatoren 22 einzelne Zellverbünde 36 hergestellt werden. Hierzu werden als Teilprozesse auf den Elektrodenstrangbereitstellvorrichtungen 24.1 Elektrodenstrangbereitstellverfahren zum Bereitstellen der Elektrodenstränge 26.1, 26.2, ein Zusammenführen der Elektrodenstränge 26.1, 26.2 und das Bilden der Zellverbünde 36 durchgeführt. Der erste Elektrodenstrang 26.1 weist vereinzelte Anoden 16 auf einem kontinuierlichen Separator 22 auf, der zweite Elektrodenstrang 26.2 weist vereinzelte Kathoden 18 auf einem kontinuierlichen Separator 22 auf. Das Elektrodenstrangbereitstellverfahren zum hier durch Herstellen erfolgenden Bereitstellen des zweiten Elektrodenstrangs 26.2 ist identisch und wird in Reihe durchgeführt zu dem Elektrodenstrangbereitstellverfahren zum hier durch Herstellen erfolgenden Bereitstellen des ersten Elektrodenstrangs 26.1. Dementsprechend haben die Elektrodenstrangbereitstellvorrichtungen 24.1, 24.2 einen gleichen Aufbau und eine gleiche Funktionsweise, die im Folgenden lediglich anhand der ersten Elektrodenstrangbereitstellvorrichtung 24.1 erläutert wird, von der ein Ausführungsbeispiel in Fig. 2 dargestellt ist. Anschließend wird anhand der Fig. 3 ein Ausführungsbeispiel für die Positionier- und Fügeeinheit 32 und die Zellverbundvereinzelungseinrichtung 34 erläutert, um die Funktionsweise des Gesamtprozesses des Elektrodenanordnungsherstellverfahrens sowie die wichtigsten Komponenten der Elektrodenanordnungsherstellvorrichtung 10 zu erläutern. Danach wird zusätzlich zum Gesamtprozess im Nachhinein noch auf ein einen insbesondere durch Laser durchzuführenden Schneidschritt bei den einzelnen Elektrodenstrangbereitstellverfahren sowie vorteilhafte Konstruktionen von Komponenten der Elektrodenstrangbereitstellvorrichtung 24.1, 24.2 eingegangen.

Fig. 2 zeigt ein Ausführungsbeispiel für eine der Elektrodenstrangbereitstellvorrichtungen 24.1, 24.2 anhand des Beispiels der ersten Elektrodenstrangbereitstellvorrichtung 24.1. Wie aus Fig. 1 ersichtlich, ist die zweite Elektrodenstrangbereitstellvorrichtung 24.2 im Wesentlichen identisch aufgebaut. In Fig. 2 ist somit nur die Materialzuführung im ersten Anlagenteil abgebildet, die den ersten Elektrodenstrang 26.1 bereitstellt, das Bereitstellen des zweiten Elektrodenstrangs 26.2 erfolgt analog.

Gemäß den Fig. 1 und 2 weist die Elektrodenstrangbereitstellvorrichtung 24.1, 24.2 eine Elektrodenbahnbereitstelleinrichtung 38, eine Separatorbahnbereitstelleinrichtung 42, eine Elektrodenvereinzelungseinrichtung 44 und eine Positionier- und Fixiereinrichtung 54 auf.

Die Elektrodenbahnbereitstelleinrichtung 38 ist zum Bereitstellen eines bahnförmigen Elektrodensubstrats 40 ausgebildet. Die Separatorbahnbereitstelleinrichtung 42 ist zum Bereitstellen der Separatorbahn 28.1, 28.2 ausgebildet. Die Bahnbereitstelleinrichtungen 38, 42 weisen jeweils insbesondere eine Coilhalterung 56 zum drehbaren Lagern eines Coils 37 mit dem Elektrodensubstrat 40 bzw. der Separatorbahn 28.1, 28.2 und ein Abrollsystem 58 zum positionsgenauen Abrollen dieser Bahnen 40, 28.1, 28.2 auf. Das Abrollsystem 58 weist Rollen 60, von denen einige als passiv drehbare Umlenkrollen und andere als aktiv angetriebene Antriebsrollen ausgebildet sind, und eine Bahnsteuereinrichtung 62 auf. Die Bahnsteuereinrichtung 62 kann eine in einer Steuerung 64 der Elektrodenanordnungsherstellvorrichtung 10 implementierte Bahnsteuereinheit, sowie Sensoren zur Erfassung von Parametern der Bahnbewegung, wie Position wenigstens einer Bahnkante und Geschwindigkeit und Aktoren zum Einstellen der Parameter der Bahnbewegung umfassen.

Im Folgenden wird die Funktion der Bahnbereitstelleinrichtungen 38, 40 erläutert. Es erfolgt eine gesteuerte Materialabwicklung über Steuerungssysteme. Hierbei wird über die Bahnsteuereinrichtung 62, die im Wesentlichen eine Wickelbockregelung (zum Steuern der Geschwindigkeit der Bahnbewegung) und eine Bahnkantensteuerung (zum Steuern der Position einer Bahnkante) aufweist, ein kontinuierliches und genaues Abrollen des bahnförmigen Elektrodensubstrats 40 und der Separatorbahn 28.1, 28.2 erreicht. Zusätzlich können im Bereich der Materialeinbringung noch Prüfsysteme integriert werden (nicht abgebildet). Diese Prüfsysteme beinhalten z.B. Oberflächen- und Geometrieprüfungen und dienen im Gesamtkonzept zur Minimierung des Ausschusses.

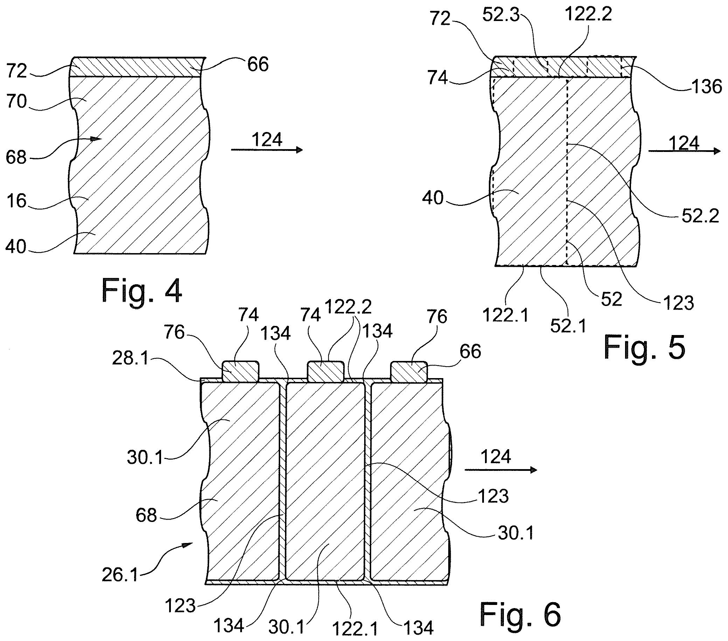

Die Materialzuführung erfolgt bevorzugt auf Coils 37 (Materialrollen), wobei eine direkte Kopplung zu vorgelagerten Produktionsschritten aber auch möglich wäre. Auf dem Coil 37 der Elektrodenbahnbereitstelleinrichtung 38 befindet sich das bahnförmige Elektrodensubstrat 40, wie es in Fig. 4 dargestellt ist.

Das in Fig. 4 dargestellte bahnförmige Elektrodensubstrat 40 weist ein leitendes Trägermaterial 66 mit einer Beschichtung 68 aus Aktivmaterial 70 und einen unbeschichteten Randstreifen 72 auf, so dass die Beschichtung 68 mit Aktivmaterial 70 auf einer Seite nicht bis zum Rand des Trägermaterials 66 reicht. Im Bereich des unbeschichteten Randstreifens 72 wird später eine Kontaktfahne 74, insbesondere in Form eines Ableiterfähnchens 76, herausgeschnitten.

In Folgenden wird erneut auf Fig. 2 Bezug genommen. Auf dem Coil 37 der Separatorbahnbereitstelleinrichtung 38 befindet sich die Separatorbahn 40. In einem Ausführungsbeispiel erfolgt ein Fixieren der Elektrodenstücke 30.1 auf dem Separator 22 mittels Laminierens. In diesem Fall wird eine Separatorbahn 40 mit einer aktivierbaren Laminierschicht bereitgestellt. Wenn das Fixieren mittels Kleben erfolgt, kann ein einfaches Separatormaterial ohne Laminierschicht bereitgestellt werden.

In Fig. 2 ist am Beispiel der ersten Elektrodenstrangbereitstellvorrichtung 24.1 eine Ausgestaltung der Separatorbahnbereitstelleinrichtung 42 und der Positionier- und Fixiereinrichtung 54 für das Laminieren dargestellt. Darin wird der Teilprozess der Aktivierung des Separators 22 durchgeführt. Die Positionier- und Fixiereinrichtung 54 dient zum Positionieren und Fixieren der vereinzelten Elektrodenstücke 30.1 auf der Separatorbahn 28.1. Sie weist in dem dargestellten Ausführungsbeispiel eine Aktivierungseinrichtung 78 zum Aktivieren einer Haftfunktion des Separators und eine später noch näher erläuterte Aufpresseinrichtung 80 auf. Die Aktivierungseinrichtung 78 weist in dem dargestellten Ausführungsbeispiel eine Aufheizstrecke 82 mit einer Heizeinheit 84 auf.

Nach dem Abrollen wird der Separator 22 für das Aufbringen der Elektrodenstücke 30.1 aktiviert. In diesem Fall wird die Separatorbahn 28.1 dabei durch die Aufheizstrecke 82 geführt und auf eine definierte Temperatur erwärmt, wodurch die Laminierschicht auf dem Separator 22 aktiviert wird. Die Heizeinheit 84 kann im Falle eines Maschinenstillstands vom Separator 22 weggefahren werden. Dadurch wird verhindert, dass Wärme unkontrolliert in das Material eingebracht wird.

Wird ein Klebeverfahren angewendet, so befinden sich an dieser Stelle Dosiereinheiten (nicht dargestellt), die den Klebstoff auf den Separator 22 aufbringen. Die Klebschicht kann dabei flächig, in Streifen oder punktförmig aufgetragen werden.

Die Elektrodenvereinzelungseinrichtung 44 ist zum Vereinzeln des Elektrodensubstrats 40 zu einzelnen Elektrodenstücken 30.1 ausgebildet. Die Elektrodenvereinzelungseinrichtung 44 weist eine Elektrodensubstratfördereinrichtung 46 und eine Schneideinrichtung 50 auf. Die Elektrodensubstratfördereinrichtung 46 weist einen in einer Förderrichtung beweglichen Träger 48 zum Fördern des Elektrodensubstrats 40 auf. Die Schneideinrichtung 50 ist zum Durchschneiden des Elektrodensubstrats 40 auf dem beweglichen Träger 48 ausgebildet. Das Durchschneiden erfolgt entlang einer Schneidkurve 52, um ein Elektrodenstück 30.1 von dem bahnförmigen Elektrodensubstrat 40 während des Förderns abzuschneiden.

Die Förderstrecke der Elektrodensubstratfördereinrichtung 44 kann unterschiedlich ausgebildet sein. Sie kann länglich oder geradlinig sein, wobei der Träger 48 beispielsweise als Förderband - z.B. Vakuumband - ausgebildet ist. In dem dargestellten Ausführungsbeispiel ist der Träger 48 rollenförmig oder walzenförmig ausgebildet, so dass die Förderstrecke und die Förderrichtung 124 der Elektrodensubstratfördereinrichtung 46 in Umfangsrichtung um eine Drehachse 144 des Trägers 48 gerichtet sind.

Der Träger 48 weist eine Reihe einzelner in Förderrichtung 124 aufeinanderfolgender Trägersegmente 86 auf, auf denen das Elektrodensubstrat 40 aufgelegt wird. Die Trägersegmente 86 weisen jeweils eine Auflagefläche 154 zum Aufnehmen mindestens eines Elektrodenstücks 30.1 auf und sind in einer in Förderrichtung gerichteten ersten Richtung und in einer senkrecht zu der Auflagefläche gerichteten zweiten Richtung relativ zueinander beweglich.

Weiter weist die Elektrodensubstratfördereinrichtung 46 eine Einrichtung zum Fixieren des Elektrodensubstrats 40 auf dem Träger 48 auf. Bei der dargestellten Ausgestaltung ist diese Einrichtung als - später noch näher erläuterte - Saugeinrichtung 88 zum Erzeugen eines Unterdrucks an dem Träger 48 ausgebildet, so dass der Träger 48 als Unterdruckwalze 89 ausgebildet ist. Aber auch andere Ausbildungen der Einrichtung zum Fixieren des Elektrodenmaterials auf dem Träger 48 sind möglich, beispielsweise eine Hafteinrichtung mit schaltbaren mechanischen Hafteigenschaften, wie dies beispielsweise in der Literaturstelle [6] beschrieben und gezeigt ist.

Die Schneideinrichtung 50 ist dazu ausgebildet, nicht nur die Schnittkante 123 zwischen den benachbarten Elektrodenstücke 30.1 in dem Elektrodensubstrat 40 zu schneiden, sondern mindestens noch eine Seitenkontur an mindestens einer Seitenkante 122.1, 122.2 der Elektrodenstücke 30.1 durch Schneiden auszuformen. Die Schneideinrichtung 50 weist vorzugsweise ein Lasersystem mit wenigstens einer nicht dargestellten Laserstrahlquelle und wenigstens einer Ablenkeinheit 90 auf. Wie später noch näher erläutert, können auch mehrere Ablenkeinheiten 90a, 90b vorgesehen sein. Weiter ist eine in der Steuerung 64 implementierte Schneidsteuereinheit 92 zum Schneiden der Schneideinrichtung 50 in Abhängigkeit von der Fördergeschwindigkeit des Elektrodensubstrats 40 vorgesehen.

Die Elektrodenvereinzelungseinrichtung 38 ist zum Durchführen des Teilprozesses des Vereinzelns der Elektroden 14.1 ausgebildet.

Dabei wird die Elektrode 14.1 auf einmal aus dem Endlosband des Elektrodensubstrats 40 herausgeschnitten. Das Schneiden erfolgt hierbei über das Lasersystem, das die mindestens eine Laserstrahlquelle und die mindestens eine optische Ablenkeinheit 90, 90a, 90b aufweist. Je nach Werkstückabmessungen kann der Schnittprozess durch ein oder mehrere Lasersysteme realisiert werden. Je nach Taktzeit und Materialeigenschaften (Abmessungen, Beschichtungsdicken, etc.) kann es zudem vorteilhaft sein, dass mehrere Ablenkeinheiten 90a, 90b parallel oder in Reihe geschaltet vorgesehen sind. Unterschiedliche Ausführungsformen der Schneideinrichtungen 50 und deren Funktion sowie Beispiele für den genaueren Ablauf des Schneidvorganges und den Verlauf der Schneidkurve werden weiter unten noch näher beschrieben.

Der Konturschnitt erfolgt auf den Trägersegmenten 86 des Trägers 48. Diese sind zur Minimierung des Materialverschnitts relativ zueinander bewegbar.

Insbesondere sind die Trägersegmente 86 als einzelne Formatkassetten ausgebildet, die auf der Unterdruckwalze 89 angeordnet sind. Durch eine synchronisierte Bewegung der Ablenkeinheit 90 und der Drehbewegung der Unterdruckwalze 89 wird somit die Elektrodenform erzeugt. Die Unterdruckwalze 89 dreht bei der Darstellung in Fig. 2 im Uhrzeigersinn, und die Drehzahl ist auf die Bahngeschwindigkeiten abgestimmt.

Zur Minimierung des Materialverschnitts sind die einzelnen Trägersegmente 86 an der Unterdruckwalze 89 radial verschiebbar. Die Position wird dabei über ein Steuerelement, insbesondere in Form wenigstens einer Kurvenscheibe 94 vorgegeben. Der detaillierte Aufbau eines bevorzugten Ausführungsbeispiels der Unterdruckwalze 89 wird später separat erläutert.

Die direkt vorgelagerte Bahnkantensteuerung der Bahnsteuereinrichtung 62 ist derart ausgebildet, dass die Lage des unbeschichteten Randstreifens 72, aus dem später die Ableiterfähnchen 76 geschnitten werden, immer mit der Schneidkurve 52 des Lasers übereinstimmt.

Abschnitte und Stäube des Elektrodenmaterials, die durch das Freischneiden entstehen, werden direkt an der Unterdruckwalze 89 über eine Prozessabsaugung abgeführt (nicht abgebildet).

Durch die Fixierung des bandförmigen Elektrodensubstrats 40 auf dem Träger 48, insbesondere der Unterdruckwalze 89, wird erreicht, dass die Elektrode 14.1, sobald diese aus dem Elektrodensubstrat 40 herausgeschnitten wurde, ihre Position nicht verliert.

Die Elektrodenstrangbereitstellvorrichtung 24.1 weist zur Reinigung der Außenfläche der Elektrode 14.1 im Bereich der Unterdruckwalze 89 in Förderrichtung nach der Schneideinrichtung 50 noch eine (erste) Reinigungsstation 96 (optional mit Ionisierung) auf, die ebenfalls an die Prozessabsaugung angeschlossen ist. Somit wird die dem Separator 22 zugewandte Seite vor dem Fixieren gereinigt.

Zur Vermeidung von Partikelverschleppungen kann die Oberfläche des Trägers 48 optional im Bereich vor der erneuten Bandzuführung ebenfalls noch gereinigt werden.

Wie oben erläutert weist die Elektrodenstrangbereitstellvorrichtung 24.1 weiter eine Positionier- und Fixiereinrichtung 54 auf, mittels der der darauffolgende Teilprozess "Elektrodenstück 30.1 auf Separatorbahn 28.1 aufbringen" durchführbar ist. Wie oben erläutert, weist die Positionier- und Fixiereinrichtung 54 die Aktivierungseinrichtung 78 oder in der nicht gezeigten Alternative die Klebeauftragseinrichtung auf. Weiter weist die Positionier- und Fixiereinrichtung 54 die Aufpresseinrichtung 80 auf. In dem gezeigten Ausführungsbeispiel weist die Aufpresseinrichtung 80 eine Gegenwalze 100 auf. Schließlich weist die Positionier- und Fixiereinrichtung 54 eine Positionier- und Fixiereinrichtungssteuerung auf, die in der Steuerung 64 implementiert sein kann und die Einrichtung zum Fixieren - z.B. die Saugeinrichtung 88 - ansteuert, um deren Fixierfunktion nach dem Aufpressen des entsprechenden Elektrodenstücks 30.1 auf der Separatorbahn 28.1 abzuschalten. Auch kann die Positionier- und Fixiereinrichtung 54 eine zweite Reinigungsstation 97 aufweisen.

Der innere Aufbau eines bevorzugten Ausführungsbeispiels der Positionier- und Fixiereinrichtung 54 und deren Funktion wird nachfolgend anhand der Darstellung von Fig. 2 näher erläutert.

Die Positionier- und Fixiereinrichtung 54 der Elektrodenstrangbereitstellvorrichtung 24.1 dient dazu, die Elektrode 14.1 auf dem Separator 22 aufzubringen. Nach dem Laserschneiden und Absaugen befindet sich nun das vereinzelte Elektrodenstück 30.1, das bereits fertig zum Bilden der jeweiligen Elektrode 14.1 geschnitten ist, auf der Unterdruckwalze 89. An der Oberseite der Unterdruckwalze 89 wird nun der gegebenenfalls bereits aktivierte Separator 22 zugeführt. Durch die kontinuierliche Drehung der Unterdruckwalze 89 entsprechend zur Bahngeschwindigkeit des Elektrodensubstrats 40 und der Separatorbahn 28.1, kann die Elektrode 14.1 nun auf die Separatorbahn 28.1 aufgebracht werden. Das Aufbringen erfolgt hier durch ein Unterbrechen des Unterdrucks an der Übergabeposition 98 - siehe Fig. 1. Zusätzlich kann die Elektrode 14.1 auch durch gezieltes Abblasen mittels Druckluft von der Unterdruckwalze 89 gelöst werden.

Um die Prozesssicherheit der Verbindung der Elektrode 14.1 mit dem Separator 22 zu erhöhen, erfolgt das Fixieren zusätzlich zu einer definierten Temperatur, die unter anderem durch die Aufheizstrecke 82 erzeugt wird, auch unter Einwirkung von Druck. Hierfür befindet sich oberhalb der Unterdruckwalze 89 die Gegenwalze 100, die beim Aufbringen der Elektrode 14.1 auf den Separator 22 und dem zeitgleichen Durchführen die erforderliche Presskraft erzeugt. Die Presskraft kann dabei über einen z.B. als Hubeinheit 102 ausgebildeten Antrieb gezielt erzeugt werden oder durch Erzeugung eines definierten Spaltes zwischen den beiden Walzen 89, 100 variiert werden.

Je nach Materialbeschaffenheit und Fixiermethode (Laminieren oder Kleben) ist es gegebenenfalls vorteilhaft, die Aufpresseinrichtung 80 wie z.B. die Gegenwalze 100 zusätzlich zu temperieren. Dies kann sowohl eine Kühlung oder eine Erwärmung der Aufpresseinrichtung 80 auf eine konstante Temperatur beinhalten. Entsprechend ist die Aufpresseinrichtung 80 bevorzugt mit einer Temperiereinrichtung versehen.

Im Falle eines Maschinenstillstands kann die Gegenwalze 100 über die Hubeinheit 102, die auch zur Erzeugung der Presskraft dient, freigefahren werden. Dadurch wird verhindert, dass Wärme unkontrolliert in das Material eingebracht wird.

Nach dem Fixieren wird die zweite Seite der Elektrode 14.1, welche Seite im Vereinzelungsprozess auf der Unterdruckwalze 89 aufliegt, in der separaten zweiten Reinigungsstation 97 gereinigt.

So wird der erste Elektrodenstrang 26.1 durch die erste Elektrodenstrangbereitstellvorrichtung 24.1 bereitgestellt. Wie oben erläutert und aus Fig. 1 ersichtlich, ist der Aufbau der zweiten Elektrodenstrangbereitstellvorrichtung 24.2 analog zu dem Aufbau der ersten Elektrodenstrangbereitstellvorrichtung 24.1, und das Erzeugen des zweiten Elektrodenstrangs 26.1 erfolgt analog zu demjenigen des ersten Elektrodenstrangs 26.2. Vorzugsweise ist dabei die Kontur der zweiten Elektrodenstücke 30.2 spiegelbildlich zu der Kontur der ersten Elektrodenstücke 30.1, so dass sich die Kontaktfahnen 74 der Anoden 16 und der Kathoden im Zellverbund 36 auf entgegengesetzten Seiten befinden.

In den Fig. 4 bis 6 sind die einzelnen Prozessschritte, die in der ersten Elektrodenstrangbereitstellvorrichtung 24.1 durchgeführt werden, anhand der Eingangs- und Ausgangsprodukte zusammen mit der Förderrichtung 124 dargestellt.

Fig. 4 zeigt das bahnförmige Elektrodensubstrat 40 für die erste Elektrode 14.1 mit unbeschichtetem Randstreifen 72.

Fig. 5 zeigt die Schnittkanten und die Schneidkurve 52 zum Formen und Abschneiden der Elektrodenstücke 30.1 und somit zur Erzeugung der Elektroden 14.1. Wie daraus ersichtlich, weist die Schneidkurve 52 der Schneideinrichtung 50 wenigstens einen Seitenkanten-Schneidkurvenbereich 52.1, 52.3 zum Schneiden einer in Förderrichtung verlaufenden Seitenkante 122.1, 122.2 des Elektrodenstückes 30.1 und wenigstens einen Schnittkanten-Schneidkurvenbereich 52.2 zum Schneiden einer sich quer zur Förderrichtung verlaufenden Schnittkante 123 des Elektrodenstückes 30.1 auf.

Fig. 5 zeigt die vereinzelten und fixierten Elektroden 14.1 auf der Separatorbahn 28.1. Dabei sind stehen Kontaktfahnen 74 nach oben in Fig. 5 vor.

Die Ausbildung der entsprechenden Eingangs- und Ausgangsprodukte für die zweite Elektrodenstrangbereitstelleinrichtung 24.2 ergibt sich aus den Fig. 4 bis 6 durch Spiegelung entlang der in Laufrichtung gerichteten Mittellinie der entsprechenden Figur.

Wie in Fig. 1 ersichtlich werden dann die so durch die beiden Elektrodenstrangbereitstellvorrichtungen 24.1, 24.2 erzeugten beiden Elektrodenstränge 26.1, 26.2 mittels der Positionier- und Fügeeinheit 32 der Elektrodenanordnungsherstellvorrichtung 10 zusammengeführt.

Fig. 3 zeigt ein Ausführungsbeispiel der Positionier- und Fügeeinheit 32 zum Zusammenführen der beiden Elektrodenstränge 26.1, 26.2. Die Positionier- und Fügeeinheit 32 weist eine Bahnsteuereinrichtung 62 für den ersten Elektrodenstrang 26.1, eine Bahnsteuereinrichtung 62 für den zweiten Elektrodenstrang 26.2, eine weitere Aktivierungseinrichtung 78 zum Aktivieren der Laminierschichten der Separatorbahnen 28.1, 28.2 (oder alternativ eine weitere Klebeauftragseinrichtung), insbesondere mit einer weiteren Aufheizstrecke 82 und eine erste und eine zweite gegeneinander laufende Presswalze 104 auf.

Mit der in Fig. 3 gezeigten Positionier- und Fügeeinheit 32 wird der Teilprozess des Zusammenführens der beiden Stränge durchgeführt.

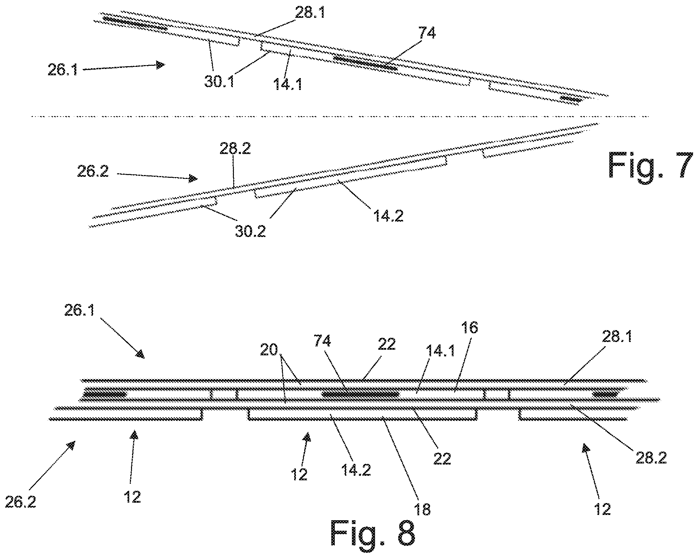

Nachdem in den vorgelagerten Prozessen jeweils ein Anodenstrang - erster Elektrodenstrang 26.1 - und ein Kathodenstrang - zweiter Elektrodenstrang 26.2 hergestellt wurden, werden diese nun zusammengeführt. Dabei werden der Anodenstrang 26.1 von oben und der Kathodenstrang 26.2 von unten über zwei Bahnzuführungen 118.1, 118.2 zusammengeführt - siehe auch Fig. 1. Durch die Verwendung der Bahnkantensteuerungen wird sichergestellt, dass die Stränge 26.1, 26.2 aufgrund zu hoher Zugspannungen nicht reißen. Zusätzlich zur Bahnzuführung 118.1, 118.2 wird die Positionierung der beiden Stränge 26.1, 26.2 zueinander über ein erstes optisches System 120 erreicht. Die erwünschte Position des ersten und des zweiten Elektrodenstrangs 26.1, 26.2 ist in den Fig. 7 und 8 dargestellt. Fig. 7 zeigt den Anodenstrang 26.1 und den Kathodenstrang 26.2 bei der Zusammenführung und Fig. 8 zeigt den verbundenen Anoden- und Kathodenstrang mit den noch verbundenen Elektrodenanordnungen 12.

Die Verbindung zwischen den beiden Strängen 26.1, 26.2 wird ebenfalls entweder durch Laminieren oder durch Kleben hergestellt. In Fig. 3 ist, analog zur Fig. 2, eine Aufheizstrecke 82 für die beiden Stränge 26.1, 26.2 dargestellt.

Nach dem Erwärmen des Separators 22 oder dem Auftragen des Klebers werden die beiden Stränge 26.1, 26.2 zwischen den beiden Presswalzen 104 zusammengeführt. Hier wird die erwünschte Prozesskraft ebenfalls durch das Spaltmaß zwischen den beiden Presswalzen 104 oder über eine voreingestellte Druckkraft definiert. Das Konzept der Presswalzen 104 ist dabei analog zu der Anordnung aus Unterdruckwalze 89 und Gegenwalzen 100. Die beiden Presswalzen 104 werden symmetrisch zu den Strängen 26.1, 26.2 zugestellt.

Weiter ist in Fig. 3 im Anschluss an die Positionier- und Fügeeinheit 32 ein Ausführungsbeispiel für die Zellverbundvereinzelungseinrichtung 34 dargestellt. Diese weist eine Zellverbundfördereinrichtung 106 mit einem in Förderrichtung bewegbaren Zellverbundträger 108, beispielsweise einem Förderband - insbesondere in Form eines Vakuumbands 130 -, und eine Zellverbundschneideinrichtung 110 zum Schneiden der noch zusammenhängenden Separatorbahnen 40, um so die einzelnen Zellverbünde 36 zu erhalten, auf. Die Zellverbundschneideinrichtung 110 weist vorzugsweise ein weiteres Lasersystem mit einem Laser 112 und einer Ablenkeinrichtung auf, die den Laserstrahl abhängig von der Fördergeschwindigkeit der Zellverbundfördereinrichtung 106 ablenkt.

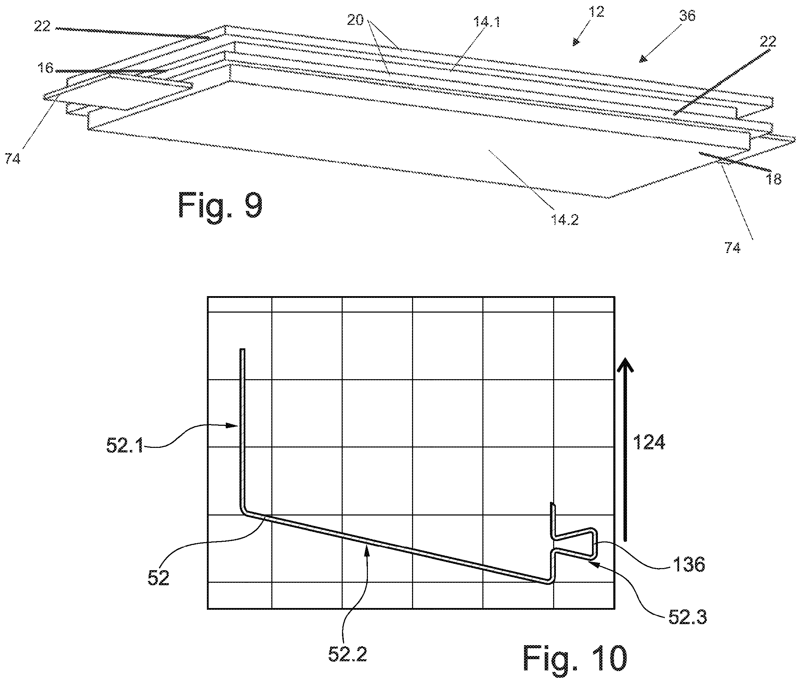

Mittels der Zellverbundvereinzelungseinrichtung 34 ist als letzter Teilprozess des Gesamtprozesses der Teilprozess des Herstellens des Zellverbunds 36 durchführbar. Ein Beispiel eines Zellverbunds 36 ist in Fig. 9 dargestellt.

Nachdem die beiden Elektrodenstränge 26.1, 26.2 miteinander verbunden sind, werden die einzelnen Zellverbünde 36, bestehend - siehe Fig. 9 - aus je einer Anode 16, einer Kathode 18 und zwei Separatoren 22, vereinzelt. Wie in Fig. 3 dargestellt, wird dabei die Sollposition der Schnittkante 128 des Zellverbunds 36 mit Hilfe eines zweiten optischen Systems 126 erfasst. Der Trennschnitt erfolgt entweder mechanisch, oder wie in Fig. 3 dargestellt, per Lasersystem mit dem Laser 112.

Abschließend werden die Zellverbünde 36 über den hier als Vakuumband 130 ausgebildeten Zellverbundträger 108 an folgende Prozessschritte zur weiteren Herstellung der Batterie übergeben.

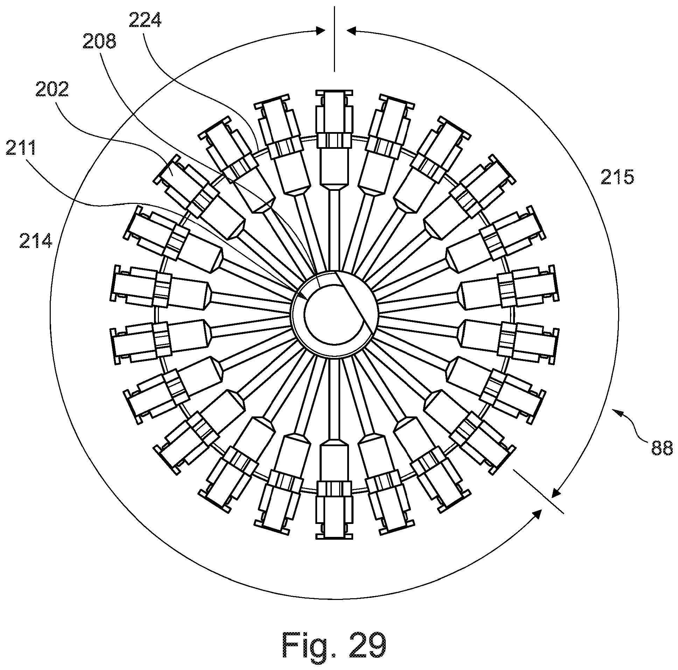

Im Folgenden werden nun Ausführungsbeispiele für den Schnittprozess zur Elektrodenvereinzelung und somit der Aufbau und die Funktion bevorzugter Ausführungsbeispiele der Elektrodenvereinzelungseinrichtung 44 und ihrer Komponenten - Elektrodensubstratfördereinrichtung 46 und Schneideinrichtung 48 - anhand der Darstellung in den Fig. 10 bis 30 näher beschrieben. Dabei wird der Schnittprozess am Beispiel des Schneidens der ersten Elektrode 14.1 erläutert. Das Schneiden der zweiten Elektrode 14.2 erfolgt analog, jedoch vorzugsweise in gespiegelter Form, wie oben erläutert, um die Anordnung der Ableiterfähnchen auf entgegengesetzten Seiten wie in Fig. 9 dargestellt zu erzielen.

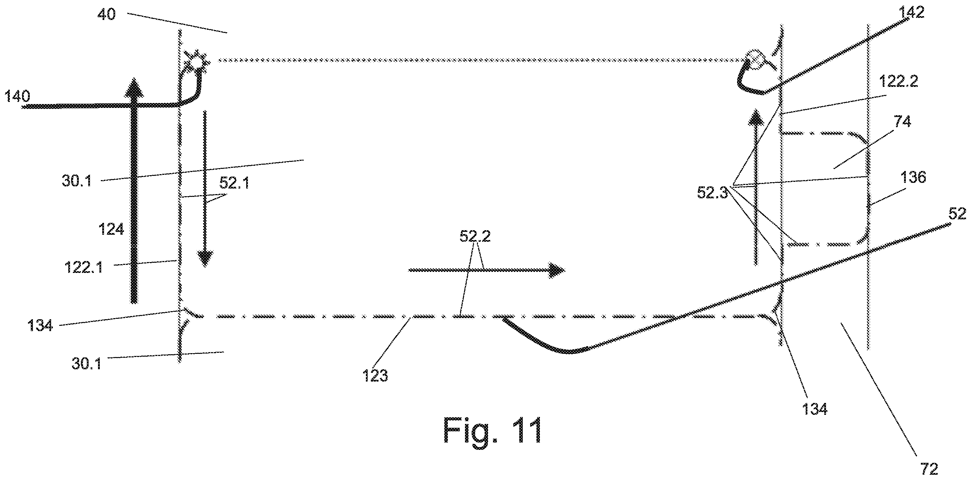

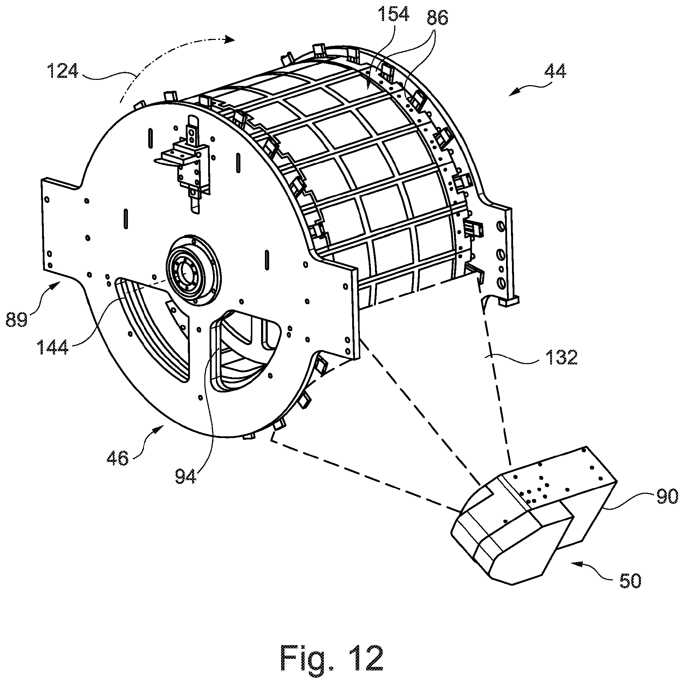

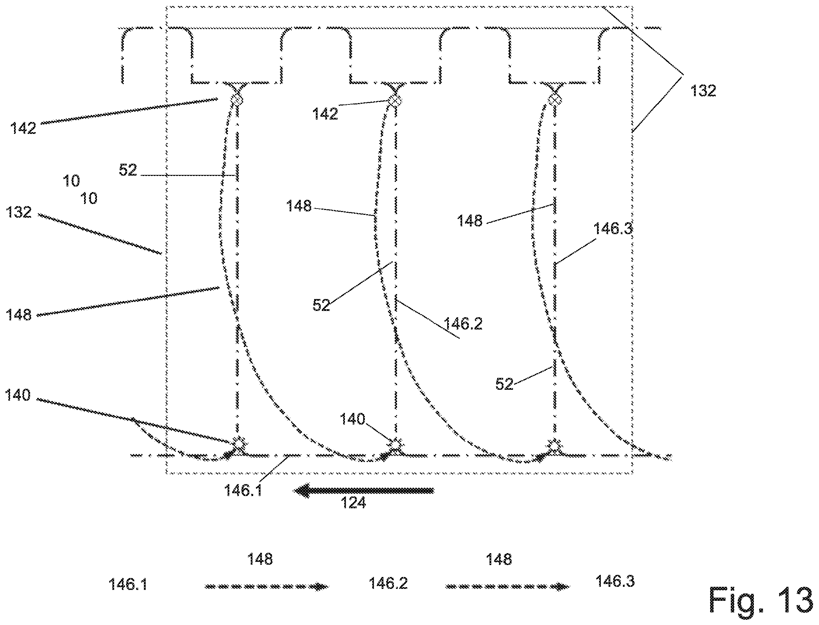

Fig. 10 zeigt ein Beispiel für die auf einer Ebene abgewickelte Schneidkurve 52. Fig. 11 zeigt die Schneidkurve 52 in einem sich mit dem Träger 48 mitbewegenden Koordinatensystem. Fig. 12 zeigt ein erstes Ausführungsbeispiel für die Elektrodenvereinzelungseinrichtung 44, bei der die Schneideinrichtung 50 mit einer (einzelnen) Ablenkeinheit 90 versehen ist, und Fig. 13 zeigt eine schematische Darstellung für eine Schnittstrategie zum in Serie erfolgenden Abschneiden von Elektrodenstücken 30.1 mit dieser mit einer Ablenkeinheit 90 versehenen Schneideinrichtung 50.

Wie oben erwähnt hat die Schneideinrichtung 50 ein Lasersystem mit mindestens einer Laserstrahlquelle (nicht dargestellt) und mindestens einer optischen Ablenkeinheit 90. Nachdem der Vereinzelungsprozess auf dem sich in Förderrichtung 124 bewegenden Träger 48 erfolgt, z.B. auf einer sich drehenden Unterdruckwalze 89, muss der Laserstrahl ablenkbar sein, um der Förderbewegung nachzufolgen. Die Ablenkeinheit 90 ist für eine entsprechend Ablenkung inklusive Höhenverstellung der Arbeitsebene bei Schneiden auf einem walzenförmigen Träger 48 ausgebildet. Hierzu ist eine derzeit bevorzugte Ausgestaltung der Ablenkeinheit 90 als 3D-Scanner mit galvanometrischen Achsen, also mit galvanometrischen Antrieben in mehreren Freiheitsgraden, ausgebildet.

Als Laserstrahlquelle weist das Lasersystem vorzugsweise einen gepulsten oder auch einen kontinuierlichen Faserlaser (nicht dargestellt) auf. Vorzugsweise ist dieser als gepulster Pikosekundenlaser mit einer Leistung von bis zu 1 kW ausgebildet.

Die Schneidkurve 52 zur Erzeugung der einzelnen Elektroden 14.1 entsteht durch Synchronisierung der Bewegung des Trägers 48, also z.B. der Drehbewegung der Unterdruckwalze 89, und der Schnittbewegung im Arbeitsbereich 132 der Ablenkeinheit 90.

Fig. 10 zeigt ein Ausführungsbeispiel der resultierenden, auf eine Ebene projizierten Schneidkurve 52 für die Vereinzelung der Elektrode 14.1. Mit anderen Worten ist die Schneidkurve 52 in Fig. 10 von einem stationären Standpunkt aus betrachtet. Bei dem Ausführungsbeispiel ist die Schneidkurve 52 durchgängig oder kontinuierlich und weist einen ersten Seitenkanten-Schneidkurvenbereich 52.1, den Schnittkanten-Schneidkurvenbereich 52.2 und einen zweiten Seitenkanten-Schneidkurvenbereich 52.3 auf, wobei die Schneidkurvenbereiche 52.1, 52.2, 52.3 zum Bilden von Abrundungen 134 an den Ecken der Elektrode 14.1 (siehe Fig. 4) bogenförmig ineinander übergehen.

Bei der dargestellten Ausführung wird mit dem ersten Seitenkanten-Schneidkurvenbereich 52.1 die erste Seitenkante 122.1 (erste kurze Kante) geschnitten, die den Randabschnitt 72 nicht aufweist, während mit dem zweiten Seitenkanten-Schneidkurvenbereich 52.3 die zweite Seitenkante 122.2 (zweite kurze Kante) geschnitten wird, an der der Randabschnitt 72 ausgebildet ist.

Der Schnitt entlang des ersten Seitenkanten-Schneidkurvenbereichs 52.1 erfolgt entgegen der Förderrichtung 124 des Trägers 48 (hier Drehrichtung der Unterdruckwalze 89) und daher ist der erste Seitenkanten-Schneidkurvenbereich 52.1 ist in der abgewickelten Darstellung entsprechend länger als der zweite Seitenkanten-Schneidkurvenbereich 52.3 ausgeführt. Der erste Seitenkanten-Schneidkurvenbereich 52.1 weist einen geradlinigen Verlauf entlang der Förderrichtung 124 auf.

Der erste Seitenkanten-Schneidkurvenbereich 52.1 geht - hier bogenförmig - dann in den Schnittkanten-Schneidkurvenbereich 52.2 über, der aufgrund des Nachfahrens des Laserstrahls mit der Förderbewegung des Trägers 48 in der abgewickelten Darstellung entsprechend schräg verläuft.

Der Schnittkanten-Schneidkurvenbereich 52.2 geht dann - hier bogenförmig - in den zweiten Seitenkanten-Schneidkurvenbereich 52.3 über, mit dem die zweite Seitenkante 122.2 geschnitten wird. Der zweite Seitenkanten-Schneidkurvenbereich 52.3 ist, da hier die Schnittbewegung in Förderrichtung des Trägers 48 erfolgt, in der abgewickelten Darstellung entsprechend kürzer. Der zweite Seitenkanten-Schneidkurvenbereich 52.3 weist einen U-förmigen Bereich 136 zum Schneiden einer Kontur der an der zweiten Seitenkante 122.2 vorstehenden Kontaktfahne 74 auf. Die Schenkel des U-förmigen Bereichs 136 sind entsprechend der Fortbewegung des Trägers 48 in Förderrichtung in Fig. 10 entsprechend schräg abgebildet.

Fig. 11 zeigt die Schneidkurve 52 und eine grundlegende Schnittbewegung in einem sich mit dem Träger 48 mitbewegten Koordinatensystem. Dabei ist bei mit gepunkteter Linie ein Trennschnitt 138 aus dem vorherigen Schnittprozess zum Abschneiden des vorherigen Elektrodenstücks 30.1 dargestellt. Weiter sind der Startpunkt 140 des Schnitts, die Schneidkurve 52 mit ihren Bereichen 52.1, 52.2, 52.3 und 136 und der Endpunkt 142 des Schnitts dargestellt.

Ein Vorteil der Schneidkurve 52 und somit auch des Prozesses liegt darin, dass nur drei Seiten einer Elektrode 14.1 geschnitten werden müssen. Wie in Fig. 5 dargestellt, trennt eine lange Schnittkante 123 immer zwei Elektroden 14.1. Fig. 11 zeigt die Schnittbewegung gemäß Abwicklung aus Fig. 10, wobei auch die Förderrichtung 124 und damit der Materialfluss dargestellt ist.

Bei dem Ausführungsbeispiel der Schneidkurve 52 von Fig. 10 und 11 ist vorgesehen, dass sowohl die erste in Förderrichtung verlaufende Seitenkante 122.1 des Elektrodenstücks 30.1 als auch die zweite in Förderrichtung verlaufende Seitenkante 122.2 des Elektrodenstücks 30.1 durch das Lasersystem geschnitten wird.

Die Seitenkante 122.1 gegenüber dem Ableiterfähnchen 76 wird bei einigen Ausgestaltungen nicht geschnitten, falls hier direkt die Bahnkante des Elektrodensubstrats 40 verwendet wird.

So ist bei Ausführungsbeispielen, wie sie in Fig. 4 und 5 angedeutet sind, die erste Seitenkante 122.1, die den Randstreifen 72 nicht aufweist, bereits in einer weitgehend passenden (z.B. geradlinigen) Form für die Elektrode 14.1. Bei einigen Ausführungsformen wird dann diese erste Seitenkante 122.1 gar nicht geschnitten, und die Schneidkurve 52 weist nur die Schneidkurvenbereiche 52.2, 52.3 zum Schneiden der Schnittkante 123 und zum Schneiden der zweiten Seitenkante 122.2 mit Konturierung der Kontaktfahne 74 auf. Bei anderen Ausführungsformen sollen im auf dem Träger 48 stattfindenden Schneidprozess an der ersten Seitenkante 122.1 noch Ecken abgerundet werden. In einem solchen Ausführungsbeispiel ist es nicht notwendig, einen vollständigen Schnitt an der ersten Seitenkante 122.1 durchzuführen, und die Schneidkurve 52 muss nicht kontinuierlich sein, sondern kann z.B. nur ein Schneiden einer Abrundung 134 an der einen Ecke der ersten Seitenkante 122.1 ermöglichen, dann ohne Schneiden entlang dem geradlinigen Verlauf der ersten Seitenkante 122.1 ausgesetzt sein und dann eine Schneiden einer Abrundung 134 an der zweiten Ecke der ersten Seitenkante 122.1 ermöglichen und geht dann in den Schnittkanten-Schneidkurvenbereich 52.2 über, der dann wieder bogenförmig (zum Bilden einer Abrundung 134) in den Seitenkanten-Schneidkurvenbereich 52.3 übergeht. Eine entsprechende Schneidkurve 52 wäre nicht ganz durchgängig, und wiese nur den Schnittkanten-Schneidkurvenbereich 52.2 und den einen Seitenkanten-Schneidkurvenbereich 52.3, eventuell noch weitere, gegebenenfalls abgesetzte Schneidkurvenbereiche für die Abrundungen 134 auf.

Somit werden dann auf der kurzen Seite der Elektroden 14.1 nur die verrundeten Kantenübergänge in den Ecken der Elektroden geschnitten.

Grundsätzlich sind mehrere Ausgestaltungen der Schnittstrategie denkbar.

Da, aufgrund spezifischer Werkstückeigenschaften wie z.B. Formatgröße, Beschichtungsstärke, Beschichtungsmaterial usw. die Schnittgeschwindigkeit variieren kann, wurden zur Einhaltung der Taktzeit verschiedene Schnittstrategien entwickelt. Die oben dargestellte Schneidkurve 52 ist dabei für alle derzeit bevorzugten Schnittstrategien zum Ausschneiden eines Elektrodenstücks 30.1 von dem Elektrodensubstrat 40 identisch.

Zur Realisierung des oben beschriebenen Gesamtprozesses sind drei grundlegende Systemaufbauten und Schnittstrategien entwickelt worden, die nachfolgend beschrieben werden. Dabei sind auch Kombinationen der im Folgenden wiedergegebenen Schnittstrategien und Systemaufbauten denkbar.

Fig. 12 zeigt ein erstes Ausführungsbeispiel der Elektrodenvereinzelungseinrichtung 44. Dabei ist die Unterdruckwalze 89 als Träger 48 vorgesehen, deren Drehrichtung um die Drehachse 144 die Förderrichtung 124 angibt. Die Schneideinrichtung 50 weist eine einzelne Ablenkeinheit 90 der oben angegebenen Art mit dem Arbeitsbereich 132 auf, die durch die Schneidsteuereinheit 92 derart gesteuert ist, dass die in Fig. 10 und 11 wiedergegebene Schneidkurve 52 versetzt nacheinander wiederholt durchfahren wird, um nachfolgende Elektrodenstücke abzuschneiden. Wie dies geschieht, ist in Fig. 13 wiedergegeben, die ein Beispiel der Schnittstrategie mit einer einzelnen Ablenkeinheit 90 zeigt. Dabei ist für jeden Schnitt 146.1, 146.2, 146.3 die entsprechende Schneidkurve 52 mit Startpunkt 140, Endpunkt 142 und Sprung 148 angegeben. Während des Sprungs 148 des Lasersystems wird die Laserstrahlung nicht abgegeben.

Demnach zeigen die Fig. 12 und 13 eine Schnittstrategie für einen Schnitt mit einer Ablenkeinheit 90. In diesem Fall ist der Arbeitsbereich 132 der Ablenkeinheit 90 so groß, dass die Elektrode 14.1 in einem Schnitt in der Bewegung herausgetrennt werden kann.

Voraussetzung für eine solche Schnittstrategie ist, dass die Breite der Elektroden 14.1 kleiner als das Arbeitsfeld des Arbeitsbereichs 132 ist und zudem die Schnittgeschwindigkeit so groß ist, dass die gesamte Elektrode 14.1, während der Bewegung durch das Arbeitsfeld in Drehrichtung geschnitten werden kann.

Fig. 12 zeigt den Systemaufbau mit einer Ablenkeinheit 90. Die Breite des Arbeitsfelds entspricht dabei der Breite der Unterdruckwalze 89. Die Schnittstrategie sieht dabei wie in Fig. 13 gezeigt so aus, dass die Ablenkeinheit 90 immer eine Elektrode 14.1 nach der anderen schneidet. Dabei muss, wie bereits beschrieben, nur eine der langen Seiten - die Schnittkante 123 - jeder Elektrode 14.1 geschnitten werden.

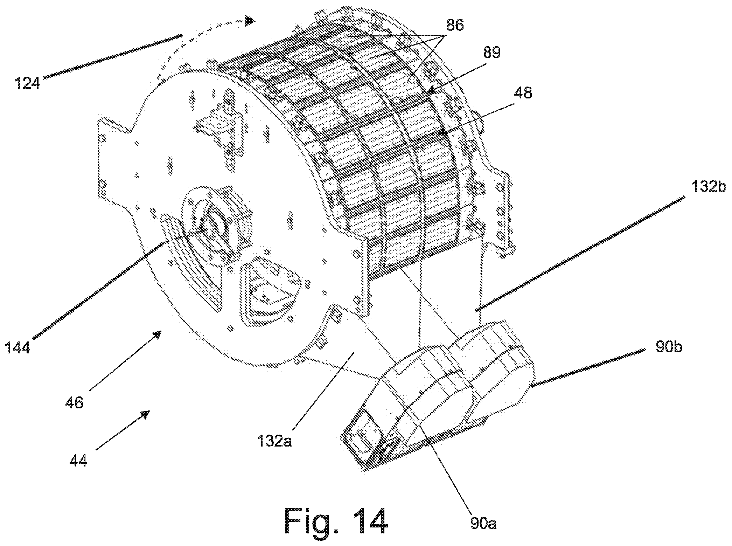

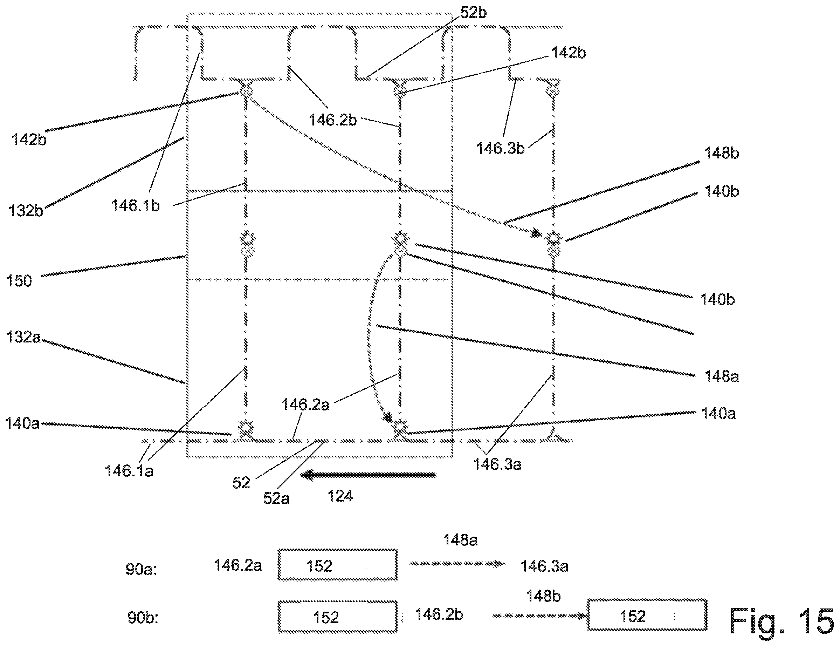

Fig. 14 zeigt ein zweites Ausführungsbeispiel der Elektrodenvereinzelungseinrichtung 44. Auch hier ist die Unterdruckwalze 89 als Träger 48 vorgesehen, deren Drehrichtung um die Drehachse 144 die Förderrichtung 124 angibt. Die Schneideinrichtung 50 weist eine erste Ablenkeinheit 90a und eine zweite Ablenkeinheit 90b jeweils der oben angegebenen Art mit überlappenden Arbeitsbereichen 132a bzw. 132b auf. Die Ablenkeinheiten 90a, 90b sind bei diesem Ausführungsbeispiel parallel und/oder quer zur Förderrichtung 124 nebeneinander angeordnet. Die Ablenkeinheiten 90a, 90b sind durch die Schneidsteuereinheit 92 derart gesteuert, dass die in Fig. 10 und 11 wiedergegebene Schneidkurve 52 versetzt nacheinander wiederholt durchfahren wird, um nachfolgende Elektrodenstücke 30.1, 30.2 abzuschneiden. Dabei wird ein erster Abschnitt 52a der Schneidkurve 52 durch die erste Ablenkeinheit 90a durchfahren (d.h. 52a bezeichnet die Schnittkurve der ersten Ablenkeinheit 90a), und ein zweiter Abschnitt 52b der Schneidkurve 52 wird durch die zweite Ablenkeinheit 90b durchfahren (d.h. 52b bezeichnet die Schnittkurve der zweiten Ablenkeinheit 90b). Wie dies geschieht, ist in Fig. 15 wiedergegeben, die ein Beispiel der Schnittstrategie mit parallelen Ablenkeinheiten 90a, 90b zeigt. Dabei ist für die einzelnen Schnitte 146.1, 146.2, 146.3 die entsprechende Schneidkurve 52 mit Abschnitten 52a, 52b und deren Startpunkt 140a, 140b und Endpunkt 142a, 142b und entsprechendem Sprung 148a, 148b angegeben. Während des Sprungs 148a, 148b wird die Laserstrahlung nicht abgegeben. Der Überlappungsbereich der Arbeitsbereiche 132a, 132b bildet eine "Stichingzone" 150.

Die Fig. 14 und 15 zeigen somit ein Ausführungsbeispiel eines Schnitts mit parallelen Ablenkeinheiten 90a ,90b. In diesem Fall sind zwei oder mehrere Ablenkeinheiten 90a, 90b parallel, d.h. nebeneinander, angeordnet.

Der Vorteil dieses Aufbaus liegt darin, dass die einzelnen Ablenkeinheiten 90a, 90b mit kleineren Arbeitsbereichen 132a, 132b arbeiten können. Die Arbeitsbereiche 132a, 132b decken zusammen die Elektroden- bzw. Walzenbreite ab.

Die Übergabe des Schnitts erfolgt dabei durch das sogenannte "Stiching" 152. Hierbei überlappen sich die Schnittkurven 52a, 52b der benachbarten Ablenkeinheiten 90a, 90b in einem Bereich - Stichingzone 150 -, sodass in Summe ein durchgehender Schnitt - Schneidkurve 52 - erfolgen kann.

Die Schnittstrategie sieht dabei wie in Fig. 15 dargestellt so aus, dass die erste Ablenkeinheit 90a immer eine Seite der Elektrode 14.1 ausschneidet (Schnitt 146.1a, 146.2a, usw.). In der Mitte der langen Elektrodenseite - Schnittkante 123 - erfolgt dann das Stiching 152. Die benachbarte Ablenkeinheit 90b schneidet dann die zweite Hälfte samt Kontur der Kontaktfahne 74 heraus (Schnitt 146.1b, 146.2b, usw.).

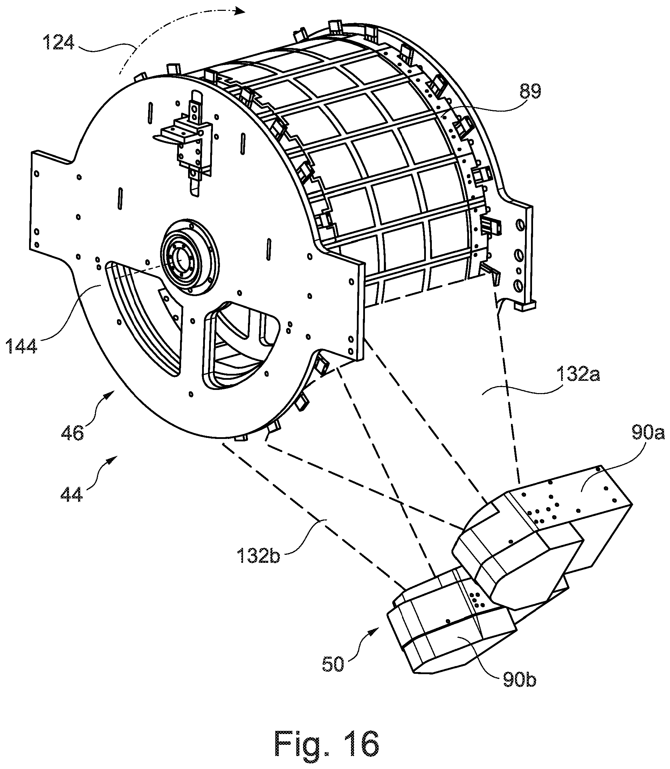

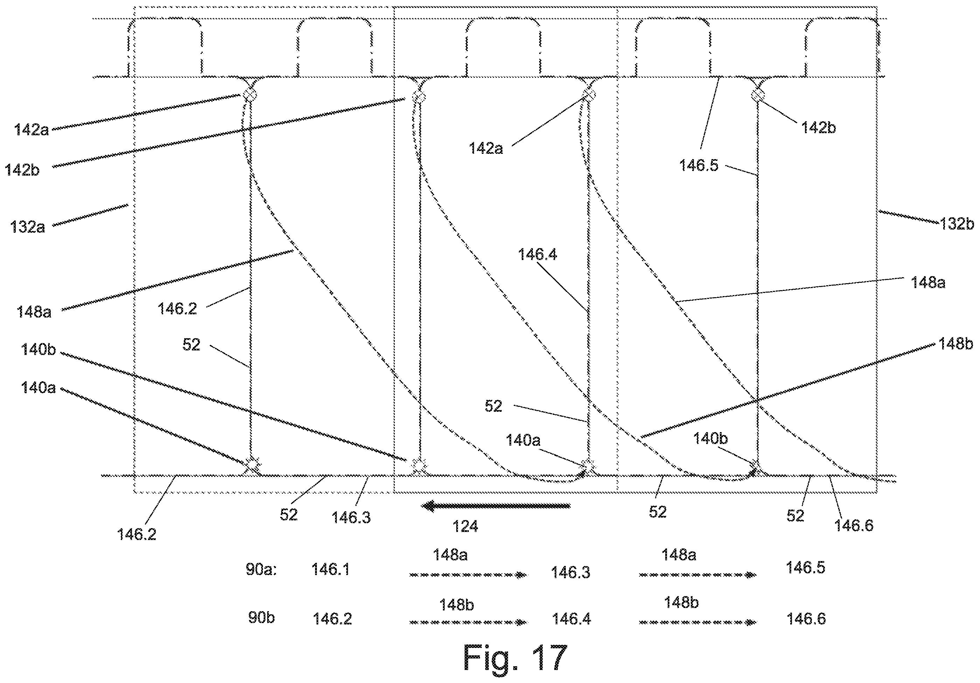

Fig. 16 zeigt ein drittes Ausführungsbeispiel der Elektrodenvereinzelungseinrichtung 44, die bis auf die Anordnung und Steuerung der Ablenkeinheiten 90a, 90b dem zweiten Ausführungsbeispiel entspricht. Die Ablenkeinheiten 90a, 90b sind hier nicht parallel oder nebeneinander, sondern in Reihe oder in Förderrichtung 124 hintereinander angeordnet. Fig. 17 zeigt ein Ausführungsbeispiel für die damit durchführbare Schnittstrategie. Jede Ablenkeinheit 90a, 90b durchfährt eine komplette Schneidkurve 52, allerdings immer nur für jede zweite Elektrode bei zwei Ablenkeinheiten (für jede dritte Elektrode bei drei Ablenkeinheiten, usw.), während die dazwischen liegenden Elektroden durch die andere(n) Ablenkeinheit(en) geschnitten werden. In dem Ausführungsbeispiel mit zwei hintereinander angeordneten Ablenkeinheiten 90a, 90b führt die erste Ablenkeinheit 90a die ungeradzahligen Schnitte 146.1, 146.3, 146.5 mit entsprechend größerem Sprung 148a durch, während die zweite Ablenkeinheit 90b die geradzahligen Schritte 146.2, 146.4, 146.6 durchführt.

Die Fig. 16 und 17 zeigen somit einen Schnitt mit Ablenkeinheiten 90a, 90b in Reihe. In diesem Fall sind zwei oder mehrere Ablenkeinheiten 90a, 90b in Reihe, d.h. hintereinander, angeordnet. Jeder Arbeitsbereich 132a, 132b deckt dabei die Elektroden- bzw. Walzenbreite ab. Der Vorteil dieses Aufbaus liegt darin, dass die einzelnen Ablenkeinheiten 90a, 90b die Elektroden 14.1 parallel (gleichzeitig oder zeitlich überlappend) herausschneiden können. Somit kann die Taktzeit für den Schnitt bei identischer Drehzahl verdoppelt werden.

Die Schnittstrategie sieht dabei wie in Fig. 17 gezeigt so aus, dass die erste Ablenkeinheit 90a immer die ungeradzahlige Elektrode 14.1 ausschneidet. Die dahinter befindliche Ablenkeinheit 90b schneidet zeitgleich oder versetzt die entsprechend benachbarte nächste geradzahlige Elektrode 14.1 heraus.

Weitere Schnittstrategien und Kombinationen der vorerwähnten Schnittstrategien sind denkbar.

Mit allen in den Fig. 12, 14, 16 gezeigten Ausführungsbeispielen lassen sich bei entsprechend kleinerer Elektrodenbreite, die weniger als die Hälfte der Breite des Elektrodensubstrats 40 beträgt, auch mehrere Elektroden 14.1 nebeneinander ausschneiden. Schnittstrategien für eine solche Vorgehensweise ergeben sich beispielsweise durch Duplizieren oder Spiegeln der Schnittkurven, sodass aus einer Elektrodenbahn zwei Elektroden vereinzelt werden. D.h. es werden im Strang nebeneinander jeweils zwei Elektroden geschnitten.

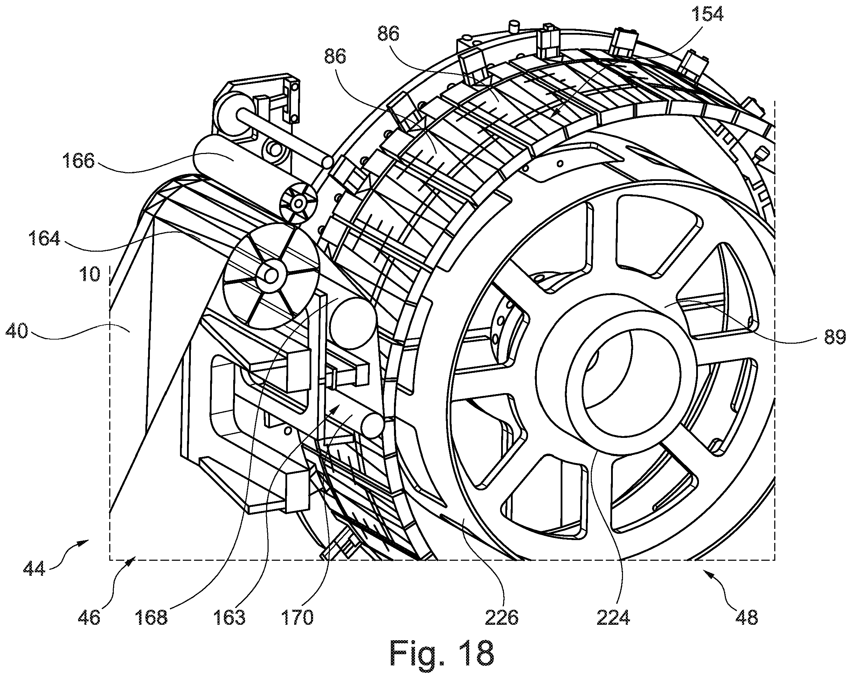

Im Folgenden werden anhand der Darstellungen in den Fig. 18 bis 30 bevorzugte Ausgestaltungen für die Elektrodensubstratfördereinrichtung 46 und für die Positionier- und Fixiereinrichtung 54 näher erläutert.

Die Elektrodensubstratfördereinrichtung 46 weist den in Förderrichtung 124 bewegbaren Träger 48 auf. Dieser weist Trägersegmente 86 auf, die eine Auflagefläche 154 für ein Elektrodenstück 30.1 oder auch für mehrere nebeneinander auszuschneidende Elektrodenstücke 30.1 bilden. Die Trägersegmente 86 sind relativ zueinander in einer in Förderrichtung 124 gerichteten Richtung und/oder in einer senkrecht zu einer Auflagefläche 154 gerichteten Richtung bewegbar. Der Schnittkanten-Schneidkurvenbereich 52.2 wird auf einen Spalt zwischen benachbarten Trägersegmenten 86 gelegt. Eine Relativbewegung der Trägersegmente 86 in einer in Förderrichtung 124 gerichteten Richtung ermöglicht ein Annähern der Trägersegmente 86 vor dem Auflagen des Elektrodensubstrats 40, so dass das Schneiden mit eng aneinander liegenden Trägersegmenten 86 und somit minimalem Verschnitt erfolgen kann, und ein anschließendes Vergrößern des Abstands zwischen den benachbarten Trägersegmenten 86, so dass die abgeschnittenen Elektrodenstücke 30.1 weiter beabstandet werden können, und wie in Fig. 6 gezeigt mit Abstand zueinander auf die Separatorbahn 28.1 aufgebracht werden können. Eine Bewegung in einer senkrecht zu der Auflagefläche 154 gerichteten Richtung ermöglicht ein Annähern der Elektrodenstücke 30.1 an die Separatorbahn 28.1 an der Übergabeposition 98. Besonders bevorzugt ist der Träger 48 walzenförmig und die Förderrichtung 124 entspricht einer Drehrichtung des Trägers 48 um die Drehachse 144. Bei einer solchen Ausbildung lässt sich die Relativbewegung der Trägersegmente 86 durch eine Bewegung der Trägersegmente 86 in einer bezüglich der Drehachse 144 radialen Richtung erreichen. Eine Bewegung radial auswärts ist eine Bewegung in einer senkrecht zu der Auflagefläche gerichteten Richtung und führt gleichzeitig zu einer Beabstandung der Trägersegmente 86 in Umfangsrichtung, d.h. der Förderrichtung 124, und somit auch zu der Relativbewegung in der in Förderrichtung 124 gerichteten Richtung.

Der Träger 48 ist demnach vorzugsweise walzenförmig und hat eine sich in Umfangsrichtung erstreckende Anordnung radial beweglicher Trägersegmente 86.

Der Träger 48 weist bevorzugt wenigstens ein Steuerelement - vorzugsweise in Form von einer oder mehreren Kurvenscheiben 94, 94a, 94b - zum relativen Bewegen der Trägersegmente 86 abhängig von der Position - insbesondere Drehstellung - des Trägers 48 auf. Bei dargestellten Ausführungsformen sind vorzugsweise eine erste Kurvenscheibe 94a an einem ersten Bereich einer umlaufenden Bewegungsbahn der Trägersegmente 86 und wenigstens eine zweite Kurvenscheibe 94b an einem zweiten Bereich der Bewegungsbahn der Trägersegmente 86 vorgesehen. Die Trägersegmente 86 sind mit den Kurvenscheiben 94a, 94b in Kontakt, um deren Relativbewegung zu steuern.

Der Träger 48 weist weiter vorzugsweise eine lösbare Befestigungseinrichtung 156 zum Befestigen und bedarfsweise Austauschen der Trägersegmente 86 auf.

Der Träger 48 weist weiter bevorzugt eine Vorspanneinrichtung 158 zum Vorspannen der Trägersegmente 86 in eine Bewegungsrichtung auf.

Als Trägersegmente 86 sind bevorzugt starre Plattenelemente aus Metall vorgesehen. Die Plattenelemente sind vorzugsweise kassettenförmig als Hohlkörper ausgeführt.

Als Teil der Saugeinrichtung 88 weisen die Trägersegmente 86 vorzugsweise eine Reihe von Ansaugöffnungen 160 auf. Bei den dargestellten Ausführungen sind diese bevorzugt entsprechend der Kontur der Elektrodenstücke 30.1 angeordnet.

Der Träger 48 weist wenigstens einen Mitnehmer 162 pro Trägersegment 86 auf, der mit dem Trägersegment 86 in Eingriff ist, so dass das Trägersegment 86 durch den Mitnehmer 162 in Förderrichtung 124 antreibbar ist und relativ zu dem Trägersegment 86 in der senkrecht zu der Auflagefläche gerichteten Richtung beweglich ist.

Im Folgenden wird anhand der Fig. 18 bis 24 ein bevorzugter konkreter Aufbau des als Unterdruckwalze 89 ausgebildeten Trägers 48 und von dessen Trägersegmenten 86 als konkrete Ausführungsform für die oben erläuterten Merkmale erläutert.

Fig. 18 zeigt einen Schnitt durch die Unterdruckwalze 89 und eine Bahnzuführung 163 der Elektrodenbahnbereitstelleinrichtung 38 zum Bereitstellen des Elektrodensubstrats 40. Die Bahnzuführung 163 weist eine - vorzugsweise durch die Bahnsteuereinrichtung 62 gesteuert - angetriebene Walze 164, eine Walze 166 mit Rücklaufsperre, eine Zuführwalze 168 und eine gefederte Andrückwalze 170 auf.

Das oben beschriebene Vereinzeln der Elektroden 14.1 erfolgt auf einer Zylinderoberfläche des Trägers 48, insbesondere der Unterdruckwalze 89. Das Elektrodensubstrat 40 wird durch die Bahnzuführung 163 der Elektrodenbahnbereitstelleinrichtung 38 gezielt zugeführt und auf der Unterdruckwalze 89 mittels durch die Saugeinrichtung 88 erzeugten Unterdrucks angesaugt und dadurch fixiert. Damit sich im Falle eines Druckabfalls das Elektrodensubstrat 40 nicht von der Unterdruckwalze 89 lösen kann, sind die Walze 166 mit Rücklaufsperre und die gefederte Andrückwalze 170 vorgesehen. Die Walze 166 mit Rücklaufsperre, die gefedert auf der angetriebenen Walze 164 aufliegt, verhindert, dass das bahnförmige Elektrodensubstrat 40 aus der Bahnzuführung 163 gezogen wird. Die Andrückwalze 170 unterstützt, dass das Elektrodensubstrat 40 auf die Unterdruckwalze 89 aufgezogen wird und sich der Unterdruck aufbauen kann.

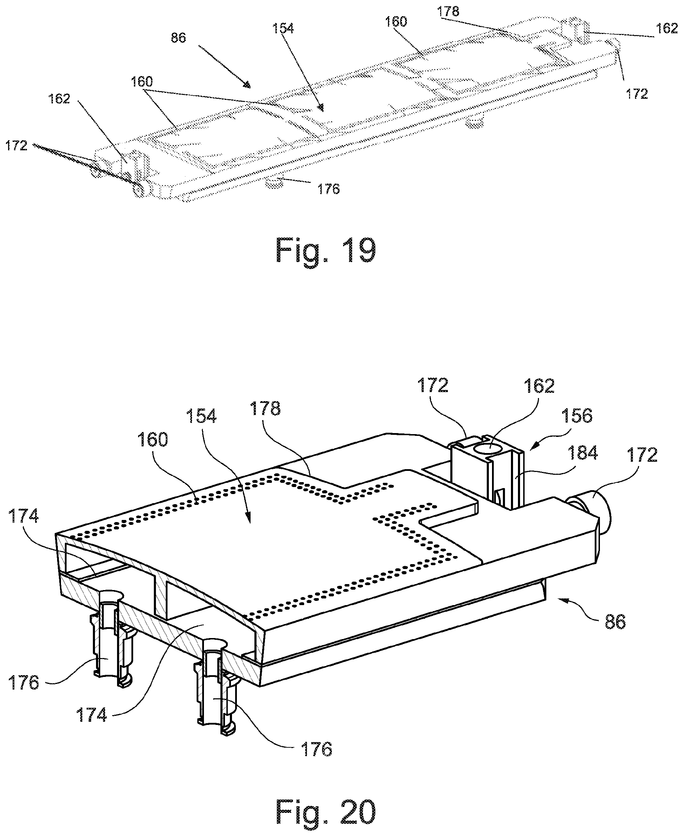

Fig. 19 und 20 zeigen ein Ausführungsbeispiel der als Kassetten ausgeführten Trägersegmente 86, wobei auch an einer Trommel 226 der Unterdruckwalze 89 angeordnete sich radial erstreckende Mitnehmer 162 dargestellt sind. Die Trägersegmente 86 weisen an ihren axialen Enden jeweils ein Paar Kurvenrollen 172 zum Angriff an den Kurvenscheiben 94, 94a, 94b auf. Die Trägersegmente 86 weisen Druckkammern 174 zum Versorgen mit Unterdruck/Überdruck auf. Die Druckkammern 174 sind mittels Anschlüssen 176 an ein Drucksystem der Saugeinrichtung 88 angeschlossen, wie dies hiernach noch näher erläutert wird. Die radial äußere Oberfläche des Trägersegments bildet die Auflagefläche 154. Sie ist mit Bohrungen zur Luftführung versehen, die in die Druckkammern 174 münden und die Ansaugöffnungen 160 bilden. Die Fixierung des Elektrodensubstrats 40 erfolgt demnach auf einzelnen Kassetten als Trägersegmente 86. Die Oberfläche der Kassetten entspricht einer Zylinderoberfläche und ist mit einer Vielzahl von Bohrungen versehen. Zum Ansaugen bzw. zum Halten des Elektrodensubstrats 40 sind in jeder Kassette zwei Druckkammern 174 vorgesehen. Über die separaten Anschlüsse 176 kann in die Druckkammern 174 gezielt Unter- / Überdruck eingeleitet werden.

Die Kassetten sind über die Mitnehmer 162 mit der Trommel der Unterdruckwalze 89 verbunden und laufen über vier Kurvenrollen 172 auf den Kurvenscheiben 94, 94a, 94b. Der Radius der Oberflächen der Kassetten ist dabei auf die Kreisbahn abgestimmt, so dass sich im Schnittbereich (Laserschnitt) eine Zylinderoberfläche ergibt. An der Oberfläche der Kassette ist eine der gewünschten Kontur der Elektrode angepasste erhabene Konturform 178 ausgebildet, die die Auflagefläche 154 bildet und deren Kanten sich beim Schneiden im Schnittbereich auf Höhe des Fokus des Schneidstrahles befinden.

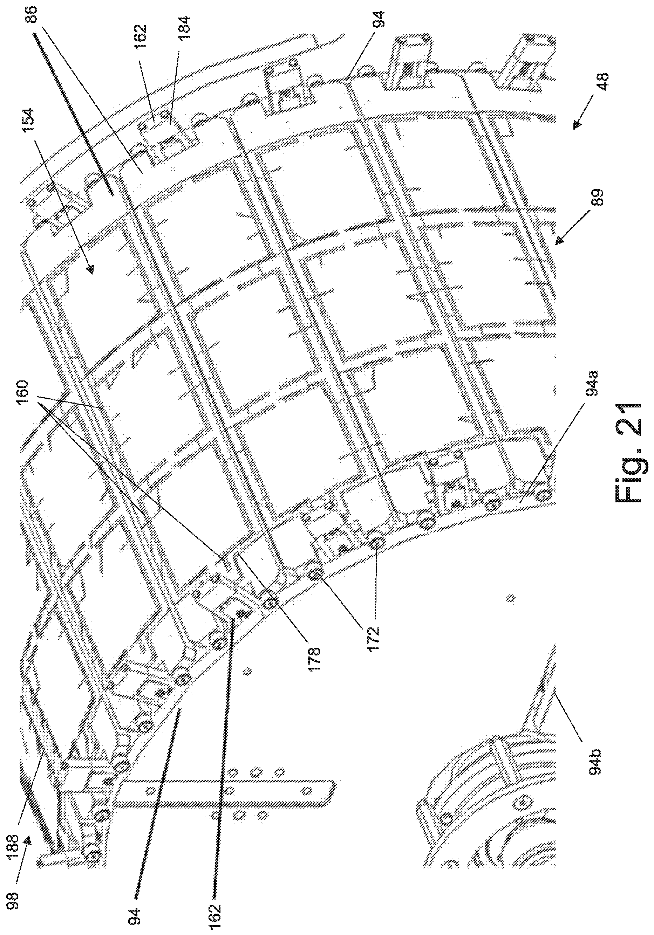

In Fig. 21 ist ein Segment der Unterdruckwalze 89 mit den einzelnen als Kassetten ausgebildeten Trägersegmenten 86 abgebildet. Die Kassetten können als Formatteile betrachtet werden, d.h. die Kassetten, und insbesondere deren Konturformen 178, sind an die Formatgrößen der zu schneidenden Elektroden 14.1 angepasst.

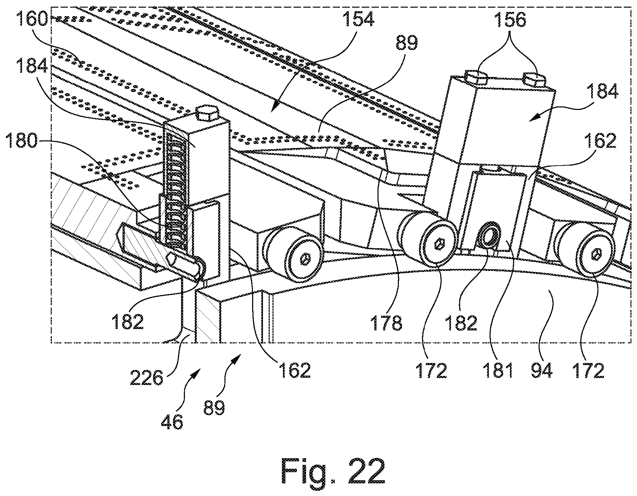

Fig. 22 zeigt einen Schnitt durch die Unterdruckwalze 89 im Bereich der Führung der Trägersegmente 86 und der Mitnehmer 162. Die Kurvenscheibe 94 dient zur radialen Führung der Trägersegmente 86 auf der Unterdruckwalze 89. Damit die Trägersegmente 86 nicht von der Kurvenscheibe 94 abheben, werden diese mit der Vorspanneinrichtung 158 auf die Bahn der Kurvenscheibe 94 gedrückt. Die Vorspanneinrichtung 158 weist insbesondere Druckfedern 180 in den Mitnehmern 162 auf. Die Mitnehmer 162 sind dabei so gestaltet, dass die Trägersegmente 86 in einer Führung 181 über zwei Lagerbolzen 182 radial und auch rotativ frei gelagert sind. Ein Lagerbolzen 182 stellt zudem die Position der Trägersegmente 86 in Achsrichtung der Unterdruckwalze 89 sicher. Somit ist es möglich, über eine Änderung der Kurvenbahn die Trägersegmente 86 radial zu verschieben.

Weiter ist an dem Mitnehmer 162 die lösbare Befestigungseinrichtung 156 vorgesehen. Diese ist derart ausgestaltet, dass die Trägersegmente 86 durch Demontage der oberen Mitnehmerhälfte 184 einfach von der Trommel 226 gehoben werden können. Im Wartungsfall können dadurch einzelne Trägersegmente 86 getauscht werden.

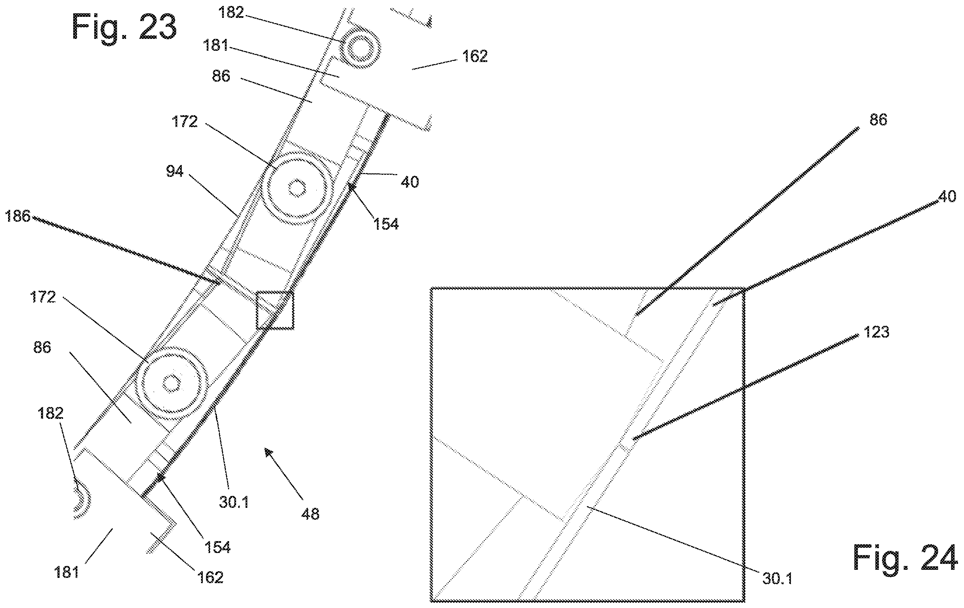

Die radiale Verstellmöglichkeit der Trägersegmente 86 dient zum einen zur Minimierung bzw. Eliminierung des Verschnitts in dem Bereich, in dem die Elektroden 14.1 vereinzelt werden, siehe Fig. 5. Außerdem erleichtert die radiale Verstellmöglichkeit, dass im Bereich der Übergabe auf den Separator 22 - an der Übergabeposition 98 - die Elektroden 14.1 in einem definierten Abstand aufgelegt werden, damit immer der gleiche Überstand von Separator 22 zu Elektrode 14.1 realisiert wird, siehe Fig. 6. Der Einfluss der radialen Verstellmöglichkeit wird im Folgenden anhand der Darstellung in den Fig. 23 und 24 erläutert. Fig. 23 zeigt eine axiale Ansicht zweier auf der Unterdruckwalze 89 benachbarter Trägersegmente 86 mit dem Elektrodensubstrat 40 im Arbeitsbereich 132, 132a, 132b der Schneideinrichtung (Bereich des Laserschnitts). Fig. 24 zeigt das in Fig. 23 mit Kästchen umrahmte Detail in vergrößerter Ansicht. Im Bereich des Laserschnitts weist die Kurvenscheibe 94 den kleinsten Radius auf, wodurch der Abstand zwischen den einzelnen Trägersegmenten 86 minimal ist. Ein minimaler Abstand zwischen den Trägersegmenten 86 ist vorteilhaft, damit ein Schneiden im Bereich des Spalts - Schnittspalt 186 - erfolgt und somit im Schnittprozess keine Beschädigung an den Trägersegmenten 86 erfolgt.

Der Abstand zwischen den Trägersegmenten 86 erlaubt es außerdem, während des Schnittprozesses die entstehenden Partikel nach innen abzusaugen. Hierfür sind auf beiden Seiten der Unterdruckwalze 89 Absaugstellen vorgesehen, wodurch die Partikel gezielt von außen nach innen abgesagt werden.

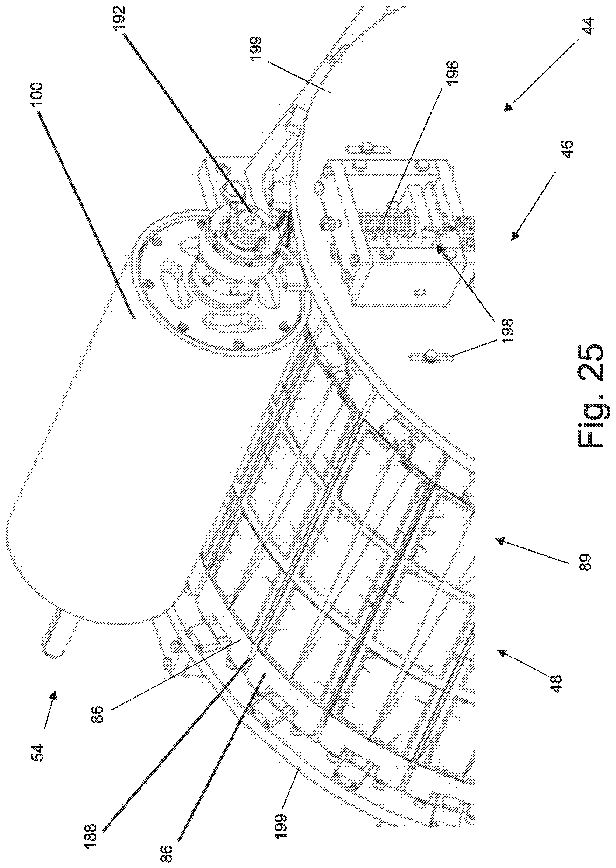

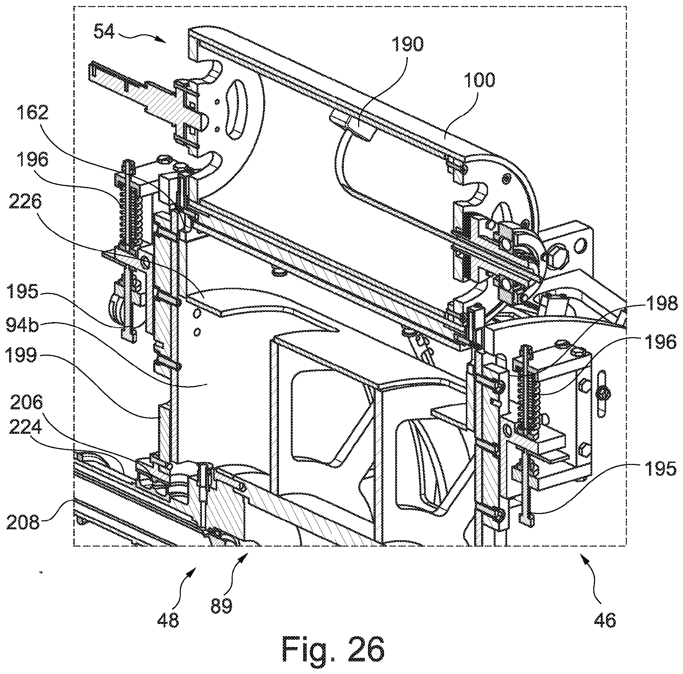

Zur Übergabe der Elektroden 14.1 an den Separator 22 wird der Abstand zwischen den Elektrodenstücken 30.1 vergrößert. Die Übergabe erfolgt im an der Übergabeposition 98 Bereich der Positionier- und Fixiereinrichtung 54. Fig. 25 und 26 zeigen ein bevorzugtes Ausführungsbeispiel der Positionier- und Fixiereinrichtung 54, mit der der Schritt "Elektrode auf den Separator aufbringen" durchgeführt wird.

Im Bereich der Übergabe der Elektrode 14.1 an den Separator 22 weist die Kurvenscheibe 94 den größten Radius auf. Die Trägersegmente 86 sind zum Bilden eines Übergabespalts 188 weiter beabstandet. Dadurch wird der gewünschte Abstand zwischen den Elektroden 14.1 wie in Fig. 6 gezeigt hergestellt.

Durch die radial innen liegende nicht mitdrehende (stationäre) Kurvenscheibe 94 werden die Prozesskräfte, die beim Aufbringen auf den Separator 22 durch die Gegenwalze 100 erzeugt werden, direkt übertragen. Es erfolgt keine Belastung auf den Drehmechanismus oder die Lager der Unterdruckwalze 89.

Zur Realisierung einer gleichmäßigen Druckverteilung über die gesamte Bahnbreite erfolgt die Höhenverstellung der Gegenwalze 100 über zwei separate Antriebe der Hubeinheit 102. Zusätzlich wird über Kraftsensoren die entstehende Druckkraft an der Gegenwalze 100 erfasst.

Die Temperierung der Gegenwalze 100 erfolgt bei dem dargestellten Ausführungsbeispiel direkt durch innenliegende Heizelemente 190 mit entsprechendem Anschluss 192. Alternativ ist es auch denkbar, die Gegenwalze 100 im oberen Bereich über IR-Strahler oder induktiv zu erwärmen.

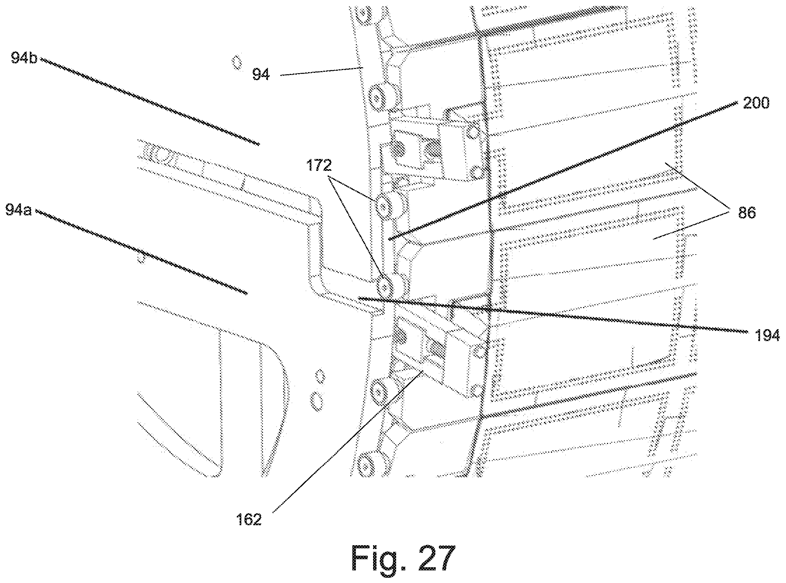

Bei einer Ausgestaltung kann jeweils eine umlaufende Kurvenscheibe 94 an den beiden Seiten vorgesehen sein. Bei der in den Fig. 25 bis 27 dargestellten Ausführungsform sind pro Seite eine Grundplatte 199 und mehrere Kurvenscheiben 94a, 94b vorgesehen, von denen wenigstens eine oder mehrere in der Lage relativ zur Grundplatte 199 einstellbar sind. Um den Spalt 188, der zwischen den Elektroden 14.1 entsteht, einstellen zu können, ist das über den Umfang umlaufende Steuerelement in zwei Hälften - die erste Kurvenscheibe 94a und die zweite Kurvenscheibe 94b - aufgeteilt, siehe Fig. 27. Fig. 27 zeigt die erste Kurvenscheibe 94a als feststehende untere Kurvenscheibe und die zweite Kurvenscheibe 94b als relativ hierzu verstellbare obere Kurvenscheibe sowie einen Verstellbereich 194 dazwischen.

Durch eine vertikale Verstellung der im Bereich der Positionier- und Fixiereinrichtung 54 befindlichen Kurvenscheibe 94b (hier die zweite, obere Kurvenscheibe 94a) kann somit der radiale Hub, den die Trägersegmente 86 zurücklegen, variiert werden. Dies hat eine Verringerung bzw. Vergrößerung des Abstands zwischen den Elektroden 14.1 zur Folge.

Die Verstellung erfolgt, siehe Fig. 25 und 26, beidseitig über je eine Einstellschraube 195, die gegen eine Gegenfeder 196 drückt. Zur Führung der verstellbaren Kurvenscheibe 94b sind seitlich zwei Führungselemente 198 eingebaut. Damit lässt sich die verstellbare Kurvenscheibe 94b relativ zu einer Grundplatte 199 führen.

Fig. 27 zeigt den Übergang zwischen den Kurvenscheiben 94a, 94b. Dabei überlappen sich die mehreren Kurvenscheiben 94a, 94b in einem Übergangsbereich - Überlappung 200 -, um eine saubere Führung der Trägersegmente 86 zu erreichen.

Damit die Trägersegmente 86 trotz der radialen Verstellung der oberen Kurvenscheibe 94b immer sauber geführt werden, überlappen sich die beiden Hälften des Steuerelements im mittleren Bereich, d.h. die Trägersegmente 86 haben in diesem Bereich der Überlappung 200 Kontakt zu beiden Kurvenscheiben 94a, 94b.

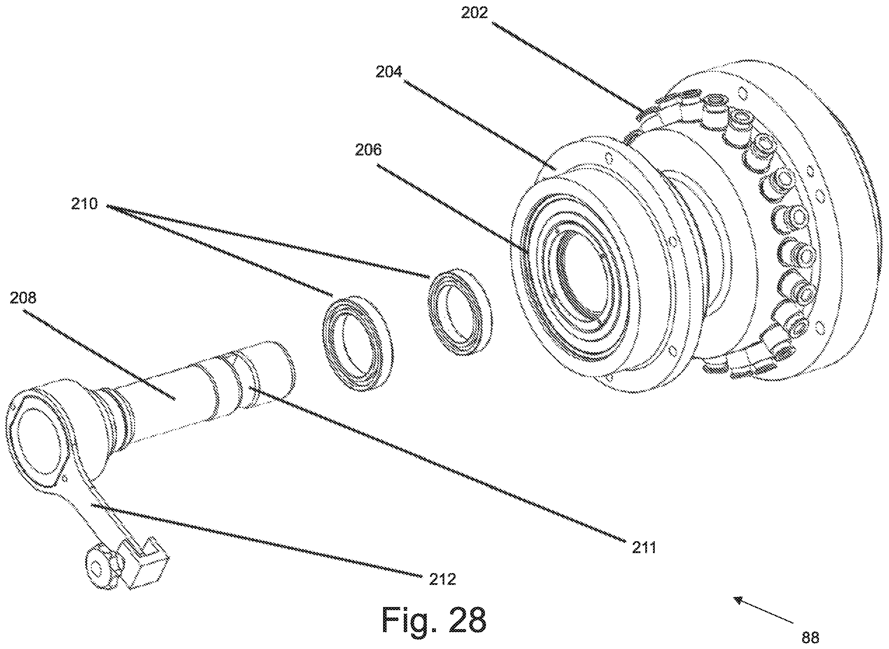

Schließlich wird im Folgenden noch eine bevorzugte Ausführungsform der Saugeinrichtung 88 anhand der Darstellung in den Fig. 28 bis 30 näher erläutert.

Fig. 28 zeigt den Aufbau der Luftführung an einem Wellenende der Unterdruckwalze 89 mit Luftanschlüssen 202, die an die Anschlüsse 176 der Trägersegmente 86 anzuschließen sind, einem Befestigungsflansch 204 der Welle 224 der Unterdruckwalze 89, einem Hauptlager 206 der Unterdruckwalze 89, mit dem diese an der jeweiligen Grundplatte 199 gelagert ist, sowie einem Steuerdorn 208 mit Lagerungen 210, einer Öffnung 211 im Steuerdorn 208 und einer Klemmung 212 zur Arretierung.

Fig. 27 zeigt einen Schnitt durch den Steuerdorn 208 und die Welle 224 der Unterdruckwalze, wobei ein offener Bereich 214, in dem die Luftanschlüsse 202 offen sind, und ein geschlossener Bereich 215, in dem die Luftanschlüsse 202 offen sind, dargestellt sind. Die Bereiche 214, 215 können über Verdrehung des Steuerdorns 208 eingestellt werden. Bei anderen, nicht näher dargestellten Ausgestaltungen ist eine solche Einstellung über irgendein anders geartetes Luftsteuerelement möglich, z.B. auch über mitdrehende schaltbare Aktoren, oder über mechanische Klappen oder Verschlüsse, die mittels Steuerkurven oder dergleichen steuerbar sind.

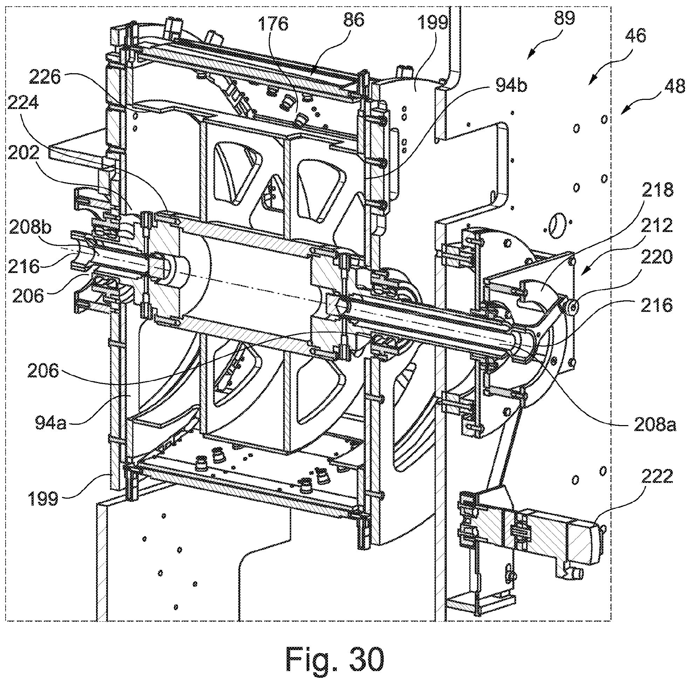

Fig. 30 zeigt eine Schnittansicht durch die Unterdruckwalze 89, wobei auf der einen Seite ein erster Steuerdorn 208a mit einem zentralen Luftanschluss 216a, die Klemmung 212 mit Klemmscheibe 218 und Arretierung 220 sowie ein Antrieb 222 für die Unterdruckwalze 89, und im Inneren die Welle 224 mit den Hauptlagern 206, die Trommel 226 und die Anschlüsse 176 der Druckkammern 174 und die Luftanschlüsse 202 und auf der anderen Seite ein zweiter Steuerdorn 208b mit zentralem Luftanschluss 216b gezeigt sind.

Die Funktion der in den Fig. 27 bis 30 gezeigten Saugeinrichtung 88 wird im Folgenden beschrieben. Zur Fixierung des Elektrodensubstrats 40 bzw. der einzelnen Elektrodenstücke 30.1 auf der Unterdruckwalze 89 wird Unterdruck verwendet - siehe die obige Beschreibung der als Kassetten ausgebildeten Trägersegmente 86. Damit die Übergabe des Elektrodenstücks 30.1 auf die Separatorbahn 28.1 prozesssicher erfolgen kann, ist eine gezielte Steuerung des Unterdrucks vorgesehen.

Bei bevorzugten Ausgestaltungen ist vorgesehen, dass zusätzlich zur Unterbrechung des Unterdrucks an der Übergabestelle auch noch ein Überdruck in die Druckkammern 174 eingebracht wird.

Zur Realisierung der gezielten Druckregelung sind in die Welle 224 der Unterdruckwalze 89 ein oder zwei Steuerdorne 208, 208a, 208b integriert. Mit Hilfe eines ersten Steuerdorns 208, 208a kann der Bereich, in dem der Unterdruck an den einzelnen Trägersegmenten 86 anliegt, gesteuert werden. Ein zweiter Steuerdorn 208b dient zur Einbringung des Überdrucks von der gegenüberliegenden Seite.

Der Unterdruck kann von außen zugeführt werden, (z.B. über den als Seitenkanalverdichter ausgeführten zentralen Luftanschluss 216a) oder über einzelne Vakuumerzeuger an den als metallische Plattenelemente oder Kassetten ausgebildeten Trägersegmenten 86 erzeugt werden. Im Falle der Verwendung von Vakuumerzeugern reicht es aus, über beide Steuerdorne 208a, 208b Überdruck (Druckluft) in die Unterdruckwalze 89 einzuleiten.

Die Steuerdorne 208, 208a, 208b sind in der Welle 224 drehbar gelagert, sodass diese bei rotierender Unterdruckwalze 89 stehen bleiben. Durch eine Bohrung im Inneren und ein Ausschnitt - Öffnung 211- in der Mantelfläche des Steuerdorns 208 wird die Luft in die Unterdruckwalze 89 zugeführt.

Am Umfang befinden sich auf beiden Seiten der Welle 224 einzelne Bohrungen entsprechend der Anzahl der Trägersegmente 86, die auf Höhe der Ausschnitte der beiden Steuerdorne 208a, 208b platziert sind. Somit kann über jede Bohrung sowohl der Unterdruck, als auch der Überdruck in die einzelnen Trägersegmente geleitet werden. Zur Einstellung der Bereiche 214, 215, in denen die Luft gezielt zugeführt wird, befindet sich am Steuerdorn 208 noch die Arretierung 220. Über diese kann der Steuerdorn 208 auf der Klemmscheibe 218 fixiert werden.

Es sind somit Vorrichtungen 24.1, 24.2, 10 und Verfahren zur Verwendung bei der Großserienherstellung von Zellverbünden 36 für Batterien mit Elektroden 14.1, 14.2 und Separatorschichten 20 beschrieben worden. Um die Prozesssicherheit und die Geschwindigkeit zu verbessern, wird bei der Bereitstellung von Elektrodensträngen 26.1, 26.2 aus einer Separatorbahn 28.1, 28.2 und darauf fixierten Elektroden vorgeschlagen, ein Vereinzeln der Elektroden 14.1, 14.2 von einem bahnförmigen Elektrodensubstrat 40 auf einem sich bewegenden Träger 48 einer Fördereinrichtung 46 derart durchzuführen,
dass wenigstens zwei Kanten 122.2, 123 der Elektroden 14.1, 14.2 in einem Schneidprozess geschnitten werden und/oder
dass relativ zueinander bewegbare Trägersegmente 86 des Trägers 48 zum Schneiden aneinander angenähert und zum Fixieren der dann vereinzelten Elektroden 30.1, 30.2 mehr voneinander beabstandet werden.

### Bezugszeichenliste:

- 10: Elektrodenanordnungsherstellvorrichtung
- 12: Elektrodenanordnung
- 14.1: erste Elektrode
- 14.2: zweite Elektrode
- 16: Anode
- 18: Kathode
- 20: Separatorschicht
- 22: Separator
- 24.1: erste Elektrodenstrangbereitstellvorrichtung
- 24.2: zweite Elektrodenstrangbereitstellvorrichtung
- 26.1: erster Elektrodenstrang
- 26.2: zweiter Elektrodenstrang
- 28.1: erste Separatorbahn
- 28.2: zweite Separatorbahn
- 30.1: erstes Elektrodenstück
- 30.2: zweites Elektrodenstück
- 32: Positionier- und Fügeeinheit
- 34: Zellverbundvereinzelungseinrichtung
- 36: Zellverbund
- 37: Coil
- 38: Elektrodenbahnbereitstelleinrichtung
- 40: bahnförmiges Elektrodensubstrat
- 42: Separatorbahnbereitstelleinrichtung
- 44: Elektrodenvereinzelungseinrichtung
- 46: Elektrodensubstratfördereinrichtung
- 48: Träger
- 50: Schneideinrichtung
- 52: Schneidkurve
- 52.1: erster Seitenkanten-Schneidkurvenbereich
- 52.2: Schnittkanten-Schneidkurvenbereich
- 52.3: zweiter Seitenkanten-Schneidkurvenbereich
- 52a: Abschnitt erste Ablenkeinheit
- 52b: Abschnitt zweite Ablenkeinheit
- 54: Positionier- und Fixiereinrichtung
- 56: Coilhalterung
- 58: Abrollsystem
- 60: Rolle
- 62: Bahnsteuereinrichtung
- 64: Steuerung
- 66: Trägermaterial
- 68: Beschichtung
- 70: Aktivmaterial
- 72: Randstreifen
- 74: Kontaktfahne
- 76: Ableiterfähnchen
- 78: Aktivierungseinrichtung
- 80: Aufpresseinrichtung
- 82: Aufheizstrecke
- 84: Heizeinheit
- 86: Trägersegment
- 88: Saugeinrichtung
- 89: Unterdruckwalze
- 90: Ablenkeinheit
- 90a: erste Ablenkeinheit
- 90b: zweite Ablenkeinheit
- 92: Schneidsteuereinheit
- 94: Kurvenscheibe
- 94a: erste Kurvenscheibe
- 94b: zweite Kurvenscheibe
- 96: Reinigungsstation
- 97: zweite Reinigungsstation
- 98: Übergabeposition
- 100: Gegenwalze
- 102: Hubeinheit
- 104: Presswalze
- 106: Zellverbundfördereinrichtung
- 108: Zellverbundträger
- 110: Zellverbundschneideinrichtung
- 112: Laser
- 118.1: erste Bahnzuführung
- 118.2: zweite Bahnzuführung
- 120: erstes optisches System
- 122.1: erste Seitenkante
- 122.2: zweite Seitenkante
- 123: Schnittkante
- 124: Förderrichtung
- 126: zweites optisches System
- 128: Schnittkante (Zellverbund)
- 130: Vakuumband
- 132: Arbeitsbereich
- 132a: Arbeitsbereich erste Ablenkeinheit
- 132b: Arbeitsbereich zweite Ablenkeinheit
- 134: Abrundung
- 136: U-förmiger Bereich
- 138: Trennschritt aus vorherigem Prozess
- 140: Startpunkt Schnitt
- 142: Endpunkt Schnitt
- 144: Drehachse
- 146.1: erster Schnitt
- 146.1a: erster Schnitt (erste Ablenkeinheit)
- 146.1b: erster Schnitt (zweite Ablenkeinheit)
- 146.2: zweiter Schnitt
- 146.2a: zweiter Schnitt (erste Ablenkeinheit)
- 146.2b: zweiter Schnitt (zweite Ablenkeinheit)
- 146.3: dritter Schnitt
- 146.3a: dritter Schnitt (erste Ablenkeinheit)
- 146.3b: dritter Schnitt (zweite Ablenkeinheit)
- 146.4: vierter Schnitt
- 146.5: fünfter Schnitt
- 146.6: sechster Schnitt
- 148: Sprung
- 148a: Sprung erste Ablenkeinheit
- 148b: Sprung zweite Ablenkeinheit
- 150: Stichingzone
- 152: Stiching
- 154: Auflagefläche
- 156: Befestigungseinrichtung
- 158: Vorspanneinrichtung
- 160: Ansaugöffnung
- 162: Mitnehmer
- 163: Bahnzuführung
- 164: angetriebene Walze
- 166: Walze mit Rücklaufsperre
- 168: Zuführwalze
- 170: gefederte Andrückwalze
- 172: Kurvenrolle
- 174: Druckkammern
- 176: Anschluss
- 178: Konturform
- 180: Druckfeder
- 181: Führung
- 182: Lagerbolzen
- 184: obere Mitnehmerhälfte
- 186: Schnittspalt
- 188: Übergabespalt
- 190: Heizelement
- 192: Anschluss Heizelement
- 194: Verstellbereich
- 195: Einstellschraube
- 196: Gegenfeder
- 198: Führungselemente
- 199: Grundplatte
- 200: Überlappung
- 202: Luftanschluss
- 204: Befestigungsflansch
- 206: Hauptlager
- 208: Steuerdorn
- 208a: erster Steuerdorn
- 208b: zweiter Steuerdorn
- 210: Lagerung Steuerdorn
- 211: Öffnung im Steuerdorn
- 212: Klemmung zur Arretierung
- 214: offener Bereich
- 215: geschlossener Bereich
- 216a: zentraler Luftanschluss am ersten Steuerdorn
- 216b: zentraler Luftanschluss am zweiten Steuerdorn
- 218: Klemmscheibe
- 220: Arretierung
- 222: Antrieb für Unterdruckwalze
- 224: Welle
- 226: Trommel

## Patentansprüche

1. Elektrodenstrangbereitstellvorrichtung (24.1, 24.2) zum Bereitstellen eines Elektrodenstrangs (26.1, 26.2) zwecks Herstellens einer Elektrodenanordnung (12) mit:
einer Elektrodenbahnbereitstelleinrichtung (38) zum Bereitstellen eines bahnförmigen Elektrodensubstrats (40);
einer Separatorbahnbereitstelleinrichtung (42) zum Bereitstellen einer Separatorbahn (28.1, 28.2);
einer Elektrodenvereinzelungseinrichtung (44) zum Vereinzeln des Elektrodensubstrats (40) zu einzelnen Elektrodenstücken (30.1, 30.2), welche eine Elektrodensubstratfördereinrichtung (46) mit einem in einer Förderrichtung (124) beweglichen Träger (48) zum Fördern des Elektrodensubstrats (40) und eine Schneideinrichtung (50) zum Durchschneiden des Elektrodensubstrats (40) auf dem Träger (48) entlang einer Schneidkurve (52), um ein Elektrodenstück (30.1, 30.2) von dem bahnförmigen Elektrodensubstrat (40) während des Förderns abzuschneiden, aufweist; und
einer Positionier- und Fixiereinrichtung (54) zum Positionieren und Fixieren der Elektrodenstücke (30.1, 30.2) auf der Separatorbahn (28.1, 28.2);
wobei die Schneideinrichtung (50) wenigstens eine Lasereinheit zum Erzeugen eines Schneidstrahls und eine Schneidsteuereinheit (92) zum Steuern des Schneidens entsprechend der Schneidkurve (52) aufweist, **dadurch gekennzeichnet, dass** die Schneidkurve (52) der Schneideinrichtung (50) eine durchgängige Schneidkurve (52) ist und wenigstens einen Seitenkanten- Schneidkurvenbereich (52.1, 52.3) zum Schneiden einer in Förderrichtung (124) verlaufenden Seitenkante (122.1, 122.3) des Elektrodenstückes (30.1, 30.2) und einen Schnittkanten-Schneidkurvenbereich (52.2) zum Schneiden einer sich quer zur Förderrichtung verlaufenden Schnittkante (123) des Elektrodenstückes (30.1, 30.2) aufweist, und dass der wenigstens eine Seitenkanten-Schneidkurvenbereich (52.1, 52.3) von einem stationären Standpunkt aus betrachtet bogenförmig in den Schnittkanten-Schneidkurvenbereich (52.2) übergeht.

2. Elektrodenstrangbereitstellvorrichtung (24.1, 24.2) nach Anspruch 1, **dadurch gekennzeichnet, dass** die Schneidkurve (52) der Schneideinrichtung (50) einen ersten Seitenkanten-Schneidkurvenbereich (52.1) zum Schneiden einer ersten Seitenkante (122.1) des Elektrodenstücks (30.1, 30.2) und einen zweiten Seitenkanten-Schneidkurvenbereich (52.3) zum Schneiden einer zweiten Seitenkante (122.2) des Elektrodenstücks (30.1, 30.2) aufweist, wobei der Schnittkanten-Schneidkurvenbereich (52.2) zwischen den Seitenkanten-Schneidkurvenbereichen (52.1, 52.3) angeordnet ist.

3. Elektrodenstrangbereitstellvorrichtung (24.1, 24.2) nach einem der voranstehenden Ansprüche, **dadurch gekennzeichnet, dass** der Seitenkanten-Schneidkurvenbereich (52.3) oder wenigstens einer von mehreren Seitenkanten-Schneidkurvenbereichen (52.1, 52.3) zum Ausschneiden einer Kontaktfahne (74) des Elektrodenstücks (30.1, 30.2) ausgebildet ist, einen U-förmigen Bereich (136) zum Schneiden einer Kontur einer an einer der Seitenkante (122.2) vorstehenden Kontaktfahne (74) aufweist und wenigstens einen in einer in Förderrichtung (124) gerichteten Richtung geradlinig verlaufenden Bereich aufweist.

4. Elektrodenstrangbereitstellvorrichtung (24.1, 24.2) nach einem der voranstehenden Ansprüche, **dadurch gekennzeichnet, dass** der Schnittkanten-Schneidkurvenbereich (52.2) einen von der Bewegung des Trägers (48) abhängigen Verlauf hat und von einem stationären Standpunkt aus betrachtet schräg zur Förderrichtung (124) verläuft und länger als der wenigstens eine Seitenkanten-Schneidkurvenbereich (52.1, 52.3) ist.

5. Elektrodenstrangbereitstellvorrichtung (24.1, 24.2) nach einem der voranstehenden Ansprüche, **dadurch gekennzeichnet, dass** die Schneideinrichtung (50) wenigstens eine Ablenkeinheit (90, 90a, 90b) für den Schneidstrahl aufweist.

6. Elektrodenstrangbereitstellvorrichtung (24.1, 24.2) nach Anspruch 5, **dadurch gekennzeichnet, dass** die Schneideinrichtung (50) eine erste und eine zweite Ablenkeinheit (90, 90a, 90b) für den Schneidstrahl aufweist, die in Förderrichtung (124) hintereinander angeordnet sind.

7. Elektrodenstrangbereitstellvorrichtung (24.1, 24.2) nach einem der voranstehenden Ansprüche, **dadurch gekennzeichnet, dass** die Elektrodensubstratfördereinrichtung (44) eine Hafteinrichtung zum Fixieren des Elektrodensubstrats (40) auf dem Träger (48) mittels schaltbarer Klebehaftung aufweist.

8. Elektrodenstrangbereitstellvorrichtung (24.1, 24.2) nach einem der voranstehenden Ansprüche, **dadurch gekennzeichnet, dass** der Träger (48) mehrere Trägersegmente (86) aufweist, die jeweils eine Auflagefläche (154) zum Aufnehmen mindestens eines Elektrodenstücks (30.1, 30.2) aufweisen und in einer in Förderrichtung (124) gerichteten ersten Richtung und in einer senkrecht zu der Auflagefläche (154) gerichteten zweiten Richtung relativ zueinander beweglich sind, und dass der Träger (48) ausgewählt ist aus einer Gruppe, die einen Träger (48), der wenigstens ein Steuerelement zum relativen Bewegen der Trägersegmente (86) abhängig von der Position des Trägers aufweist; einen Träger (48), der eine lösbare Befestigungseinrichtung (156) zum Befestigen und bedarfsweise Austauschen der Trägersegmente (86) aufweist, einen Träger (48), der eine Vorspanneinrichtung (158) zum Vorspannen der Trägersegmente (86) in eine Bewegungsrichtung aufweist, einen Träger (48), der wenigstens eine erste Kurvenscheibe (94a) an einem ersten Bereich einer umlaufenden Bewegungsbahn der Trägersegmente (86) und wenigstens eine zweite Kurvenscheibe (94b) an einem zweiten Bereich der Bewegungsbahn der Trägersegmente (86) aufweist, wobei die Trägersegmente (86) mit den Kurvenscheiben (94a, 94b) in Kontakt sind, um deren Relativbewegung zu steuern, einen Träger (48), der wenigstens einen Mitnehmer (162) pro Trägersegment (86) aufweist, der mit dem Trägersegment (86) in Eingriff ist, so dass das Trägersegment (86) durch den Mitnehmer (162) in Förderrichtung (124) antreibbar ist und relativ zu dem Trägersegment (86) in der zweiten Richtung beweglich ist, und einen Träger (48), der Trägersegmente (86) mit einer schaltbaren Hafteinrichtung aufweist, umfasst.

9. Elektrodenstrangbereitstellverfahren zum Bereitstellen eines Elektrodenstrangs (26.1) zwecks Herstellens einer Elektrodenanordnung (12), umfassend:
a) Bereitstellen eines bahnförmigen Elektrodensubstrats (40);
b) Bereitstellen einer Separatorbahn (28.1, 28.2);
c) Vereinzeln des Elektrodensubstrats (40) zu einzelnen Elektrodenstücken (30.1, 30.2), umfassend
c1) Fördern des Elektrodensubstrats (40) auf einem Träger (48) und
c2) Abschneiden eines Elektrodenstücks (30.1, 30.2) von dem bahnförmigen Elektrodensubstrat (40) während des Förderns durch Schneiden wenigstens zweier Kanten (122.2, 123) der Kontur des Elektrodenstücks (30.1, 30.2) auf dem Träger (40) entlang einer durchgängig ausgebildeten Schneidkurve (52); und
d) Positionieren und Fixieren der Elektrodenstücke (30.1, 30.2) auf der Separatorbahn (28.1, 28.2), wobei Schritt c2) die Schritte umfasst:
c2a) Schneiden einer in Förderrichtung (124) verlaufenden Seitenkante (122.2) des Elektrodenstückes (30.1, 30.2) und Schneiden einer quer zur Förderrichtung verlaufenden Schnittkante (123) des Elektrodenstückes (30.1, 30.2) in einem Schneidvorgang mit der Schneidkurve (52) durch
i) kontinuierliches Durchführen des Schneidvorganges durch kontinuierliches Durchfahren der Schneidkurve (52) mit einem Schneidstrahl oder
ii) Durchführen des Schneidvorganges (52) durch Durchfahren eines Teilabschnitts (52a) der Schneidkurve (52), der einen Übergang zwischen einer Seitenkante (122.1) und der Schnittkante (123) umfasst, mit einem mittels einer ersten Ablenkeinheit (90a) abgelenkten Schneidstrahl und anschließendes Durchfahren des verbleibenden Teilabschnitts (52b) der Schneidkurve (52) mit einem mittels einer zweiten Ablenkeinheit (90b) abgelenkten Schneidstrahl,
wobei das Schneiden wenigstens einer Seitenkante (122.1, 122.2) des Elektrodenstücks (30.1, 30.2) von einem stationären Standpunkt aus betrachtet bogenförmig in das Schneiden der Schnittkante (123) übergeht.

10. Elektrodenstrangbereitstellverfahren nach Anspruch 9,
**dadurch gekennzeichnet, dass** Schritt c2) wenigstens einen der Schritte umfasst:
c2b) Schneiden einer ersten Seitenkante (122.1), der Schnittkante (123) und einer zweiten Seitenkante (122.2) des Elektrodenstücks (30.1, 30.2) in einem Schneidvorgang mit der Schneidkurve (52); und
c2c) durchgängiges Schneiden entlang der durchgängigen Schneidkurve (52).

11. Elektrodenstrangbereitstellverfahren nach Anspruch 9 oder 10, **dadurch gekennzeichnet, dass** das Schneiden wenigstens einer Seitenkante (122.1, 122.2) des Elektrodenstücks (30.1, 30.2) die Schritte umfasst:
11.1 Ausschneiden einer Kontaktfahne (74) des Elektrodenstücks (30.1, 30.2),
11.2 Schneiden einer U-förmigen Kontur einer an der Seitenkante (122.2) vorstehenden Kontaktfahne (74) und
11.3 Schneiden entlang eines in einer in Förderrichtung (124) gerichteten Richtung geradlinig verlaufenden Bereichs (52.1) der Schneidkurve (52).

12. Elektrodenstrangbereitstellverfahren nach einem der Ansprüche 9 bis 11, **dadurch gekennzeichnet, dass** das Schneiden der Schnittkante (123)
12.1 abhängig von der Bewegung des Trägers (48) verläuft und
12.2 von einem stationären Standpunkt aus betrachtet schräg zur Förderrichtung (124) verläuft und
12.3 länger als das Schneiden der wenigstens einen Seitenkante (122.1, 122.2) verläuft.

13. Elektrodenstrangbereitstellverfahren nach einem der Ansprüche 9 bis 12, **dadurch gekennzeichnet, dass** Schritt c2) umfasst:
Ablenken wenigstens eines Schneidstrahls mittels einer ersten und einer zweiten Ablenkeinheit (90a, 90b), die in Förderrichtung hintereinander angeordnet sind, um mittels der Ablenkeinheiten (90a, 90b) Elektroden (14.1) gleichzeitig oder zeitlich überlappend herauszuschneiden.

14. Elektrodenstrangbereitstellverfahren nach einem der Ansprüche 9 bis 13, **dadurch gekennzeichnet, dass** Schritt c1) umfasst:
c1a) Auflegen von voneinander durch Schritt c2) zu trennenden Bereichen des Elektrodensubstrats (40) auf an mehreren Trägersegmenten (86) des Trägers (48) gebildeten Auflageflächen (154), wobei die Trägersegmente (86) in einer in Förderrichtung (124) gerichteten ersten Richtung und in einer senkrecht zu der Auflagefläche (124) gerichteten zweiten Richtung relativ zueinander beweglich sind, wobei das Auflegen und Schritt c2) mit zueinander angenäherten benachbarten Trägersegmenten (86) durchgeführt wird und die benachbarten Trägersegmente (86) mit daran fixierten Elektrodenstücken (30.1, 30.2) zum Durchführen von Schritt d) in die erste und/oder zweite Richtung auseinander bewegt werden, wobei das Elektrodenstrangbereitstellverfahren wenigstens einen der Schritte umfasst:
14.1 Führen der Trägersegmente (86) über wenigstens eine erste Kurvenscheibe (94a) an einem ersten Bereich einer umlaufenden Bewegungsbahn der Trägersegmente (86) und wenigstens eine zweite Kurvenscheibe (86) an einem zweiten Bereich der Bewegungsbahn der Trägersegmente (86), um über den Verlauf der Kurvenscheiben (94a, 94b) die Bewegung der Trägersegmente (86) zu steuern; und
14.2 Antreiben der Trägersegmente (86) durch jeweilige Mitnehmer (162) in Förderrichtung (124) und Bewegen der Trägersegmente (6) relativ zu dem jeweiligen Mitnehmer (162) in der zweiten Richtung.

15. Elektrodenstrangbereitstellverfahren nach einem der Ansprüche 9 bis 14, **gekennzeichnet durch** Fixieren des Elektrodensubstrats (40) auf dem Träger (48) mittels einer schaltbaren Hafteinrichtung oder Klebehaftung.

## Claims

1. Electrode string providing apparatus (24.1, 24.2) for providing an electrode string (26.1, 26.2) for the purpose of producing an electrode arrangement (12), comprising:
an electrode web providing device (38) for providing a web-like electrode substrate (40);
a separator web providing device (42) for providing a separator web (28.1, 28.2);
an electrode separation device (44) for separating the electrode substrate (40) into individual electrode pieces (30.1, 30.2) , which comprises an electrode substrate conveyor device (46) having a carrier (48) movable in a conveying direction (124) for conveying the electrode substrate and a cutting device (50) for cutting through the electrode substrate (40) on the carrier (46) along a cutting curve (52) in order to cut off an electrode piece (30.1, 30.2) from the web-like electrode substrate (40) during conveying; and
a positioning and fixing device (54) for positioning and fixing the electrode pieces (30.1, 30.2) on the separator web (28.1, 28.2);
wherein the cutting device (50) comprises at least a laser unit for generating a cutting beam and a cutting control unit (92) for controlling cutting corresponding to the cutting curve (52),
**characterized in that** the cutting curve (52) of the cutting device (50) is a continuous cutting curve (52) and comprises at least a side edge cutting curve section (52.1, 52.3) for cutting a side edge (122.1, 122.3) of the electrode piece (30.1, 30.2) running in a conveying direction (124) and a cut edge cutting curve section (52.2) for cutting a cut edge (123) of the electrode piece (30.1, 30.2) running transversely to the conveying direction, and that the at least one side edge cutting edge section (52.1, 52.3) transitions to the cut edge cutting curve section (52.2) in an arcuate manner when viewed from a stationary position.

2. Electrode string providing apparatus (24.1, 24.2) according to claim 1, **characterized in that** the cutting curve (52) of the cutting device (50) comprises a first side edge cutting curve section (52.1) for cutting a first side edge (122.1) of the electrode piece (30.1, 30.2) and a second side edge cutting curve section (52.3) for cutting a second side edge (122.2) of the electrode piece (30.1, 30.2), wherein the cut edge cutting curve section (52.2) is arranged between the side edge cutting curve sections (52.1, 52.3).

3. Electrode string providing apparatus (24.1, 24.2) according to any one of the preceding claims, **characterized in that** the side edge cutting curve section (52.3) or at least one of several side edge cutting curve sections (52.1, 52.3) is configured for cutting out a contact lug (74) of the electrode piece (30.1, 30.2), comprises a U-shaped section (136) for cutting a contour of a contact lug (74) protruding from one side edge (122.2) and comprises at least one straight section in a direction oriented in the conveying direction (124).

4. Electrode string providing apparatus (24.1, 24.2) according to any one of the preceding claims, **characterized in that** the cut edge cutting curve section (52.2) has a course that depends on the movement of the carrier (48) and runs diagonally to the conveying direction (124), viewed from a stationary position, and is longer than the at least one side edge cutting curve section (52.1, 52.3).

5. Electrode string providing apparatus (24.1, 24.2) according to any one of the preceding claims, **characterized in that** the cutting device (50) has at least one deflection unit (90, 90a, 90b) for the cutting beam.

6. Electrode string providing apparatus (24.1, 24.2) according to claim 5, **characterized in that** the cutting device (50) has a first and a second deflection unit (90, 90a, 90b) for the cutting beam which are arranged one behind the other.

7. Electrode string providing apparatus (24.1, 24.2) according to any one of the preceding claims, **characterized in that** the electrode substrate conveying device (44) has an adhesion device for fixing the electrode substrate (40) on the carrier (48) by means of switchable adhesive bonding.

8. Electrode string providing apparatus (24.1, 24.2) according to any one of the preceding claims, **characterized in that** the carrier (48) has several carrier segments (86), each of which has a support surface (154) for receiving at least one electrode piece (30.1, 30.2) and which are movable relative to each other in a first direction oriented in a conveying direction (124) and in a second direction oriented perpendicular to the support surface (154), and that the carrier (48) is selected from a group comprising a carrier (48) which has at least one control element for relatively moving the carrier segments (86) depending on the position of the carrier; a carrier (48) which has a releasable fastening device (156) for fastening and, if necessary, exchanging the carrier segments (86), a carrier (48) which has a biasing device (158) for biasing the carrier segments (86) in a movement direction, a carrier (48) which has at least a first cam disc (94a) at a first section of a circumferential trajectory of the carrier segments (86) and at least a second cam disc (94b) at a second section of the trajectory of the carrier segments (86), wherein the carrier segments (86) are in contact with the cam discs (94a, 94b) in order to control their relative movement, a carrier (48), which has at least one driving dog (162) per carrier segment (86) which is in engagement with the carrier segment (86), so that the carrier segment (86) can be driven in the conveying direction (124) by the driving dog (162) and is movable relative to the carrier segment (86) in the second direction, and a carrier (48) which has carrier segments (86) with a switchable adhesion device.

9. Electrode string providing method for providing an electrode string (26.1) for the purpose of producing an electrode arrangement (12), comprising:
a) providing a web-like electrode substrate (40);
b) providing a separator web (28.1, 28.2);
c) separating the electrode substrate (40) into individual electrode pieces (30.1, 30.2), comprising:
c1) conveying the electrode substrate (40) on a carrier (48) and
c2) cutting off the electrode piece (30.1, 30.2) from the web-like electrode substrate (40) during conveying by cutting at least two edges (122.2, 123) of the contour of the electrode piece (30.1, 30.2) on the carrier along a continuous cutting curve (52); and
d) positioning and fixing the electrode pieces (30.1, 30.2) on the separator web (28.1, 28.2), wherein step c2) includes the steps:
c2a) cutting a side edge (122.2) of the electrode piece (30.1, 30.2) running in a conveying direction and cutting a cut edge (123) of the electrode piece (30.1, 30.2) running diagonally to the conveying direction in a cutting operation with the cutting curve (52) by
i) continuously performing the cutting operation by continuously passing through the cutting curve (52) with a cutting beam or
ii) performing the cutting operation (52) by passing through a sub-section (52a) of the cutting curve (52), which sub-section comprises a transition between a side edge (122.1) and the cut edge (123), with a cutting beam deflected by means of a first deflection unit (90a) and subsequently by passing through the remaining sub-section (52b) of the cutting curve (52) with a cutting beam deflected by means of a second deflection unit (90b),
wherein cutting at least one side edge (122.1, 122.2) of the electrode piece (30.1, 30.2) transitions to cutting the cut edge (123) in an arcuate manner when viewed from a stationary position.

10. Electrode string providing method according to claim 9,
**characterized in that** step c2) comprises at least one of the steps:
c2b) cutting a first side edge (122.1), the cut edge (123) and a second side edge (122.2) of the electrode piece (30.1, 30.2) in a cutting operation with the cutting curve (52); and
c2c) continuous cutting along a continuous cutting curve (52).

11. Electrode string providing method according to claim 9 or 10, **characterized in that** cutting at least one side edge (122.1, 122.2) of the electrode piece (30.1, 30.2) comprises the steps:
11.1 cutting out at least one contact lug (74) of the electrode piece (30.1, 30.2),
11.2 cutting a U-shaped contour of a contact lug (74) protruding from the side edge and
11.3 cutting along a straight section (52.1) of the cutting curve (52) in a direction oriented in the conveying direction (124).

12. Electrode string providing method according to any one of claims 9 to 11, **characterized in that** cutting the cut edge (123)
12.1 proceeds depending on the movement of the carrier (48) and
12.2 takes place diagonally to the conveying direction (124) when viewed from a stationary position and
12.3 lasts longer than cutting the at least one side edge (122.1, 122.2).

13. Electrode string providing method according to any one of claims 9 to 12, **characterized in that** step c2) comprises:
deflecting at least one cutting beam by means of a first and a second deflection unit (90a, 90b) which are arranged one behind the other in the conveying direction, in order to cut out electrodes (14.1) simultaneously or overlapping in time by means of the deflection units (90a, 90b).

14. Electrode string providing method according to any one of claims 9 to 13, **characterized in that** step c1) comprises:
c1a) placing sections of the electrode substrate (40) to be separated from each other by step c2) on support surfaces (154) formed on several carrier segments (86) of the carrier (48), wherein the carrier segments (86) are movable relative to each other in a first direction oriented in the conveying direction (124) and in a second direction oriented perpendicular to the support surface (124), wherein the placing and step c2) are carried out with adjacent carrier segments (86) brought closer to each other, and the adjacent carrier segments (86) with electrode pieces (30.1, 30.2) fixed thereon are moved apart in the first and/or second direction in order to carry out step d), wherein the electrode string providing method comprises at least one of the steps:
14.1 guiding the carrier segments (86) via at least one cam disc (94a) at a first section of a cirumferential trajectory of the carrier segments (86) and at least one second cam disc (86) at a second section of the trajectory of the carrier segments (86) in order to control the movement of the carrier segments (86) via the course of the cam discs (94a, 94b); and
14.2 driving the carrier segments (86) by respective driving dogs (162) in the conveying direction (124) and moving the carrier segments (6) relative to the respective driving dog (162) in the second direction.

15. Electrode string providing method according to any one of claims 9 to 14, **characterized by** fixing the electrode substrate (40) on a carrier (48) by means of a switchable adhesion device or by adhesive bonding.

## Revendications

1. Dispositif de fourniture des brins d'électrodes (24.1, 24.2) destiné à fournir un brin d'électrodes (26.1, 26.2) dans le but de produire un agencement d'électrodes (12), comprenant:
un dispositif de fourniture de bande d'électrodes (38) destiné à fournir un substrat d'électrodes en forme de bande (40);
un dispositif de fourniture de bande séparatrice (42) pour fournir une bande séparatrice (28.1, 28.2);
un dispositif de séparation d'électrodes (44) pour séparer le substrat d'électrodes (40) en pièces d'électrode individuelles (30.1, 30.2) qui comprend un dispositif de transport de substrat d'électrodes (46) comportant un support (48) mobile dans une direction de transport (124) pour transporter le substrat d'électrode et un dispositif de coupe (50) pour couper le substrat d'électrode (40) sur le support (46) le long d'une courbe de coupe (52) afin de découper une pièce d'électrode (30.1, 30.2) à partir du substrat d'électrode en forme de bande (40) pendant le transport; et
un dispositif de positionnement et de fixation (54) pour positionner et fixer les pièces d'électrode (30.1, 30.2) sur la bande séparatrice (28.1, 28.2);
dans lequel le dispositif de coupe (50) comprend au moins une unité laser pour générer un faisceau de coupe et une unité de commande de coupe (92) pour commander la coupe en fonction de la courbe de coupe (52), **caractérisé en ce que** la courbe de coupe (52) du dispositif de coupe (50) est une courbe de coupe continue (52) et comprend au moins une zone de courbe de coupe du bord latéral (52.1, 52.3) pour couper un bord latéral (122.1, 122.3) de la pièce d'électrode (30.1, 30.2) s'étendant dans une direction de transport (124) et une zone de courbe de coupe du bord coupé (52.2) pour couper un bord coupé (123) de la pièce d'électrode (30.1, 30.2) s'étendant transversalement à la direction de transport, et que ladite au moins une zone de courbe de coupe du bord latéral (52.1, 52.3) passe à la section de courbe de coupe du bord coupé (52.2) de manière arquée lorsqu'on la regarde depuis une position stationnaire.

2. Dispositif de fourniture des brins d'électrodes (24.1, 24.2) selon la revendication 1, **caractérisé en ce que** la courbe de coupe (52) du dispositif de coupe (50) comprend une première zone de courbe de coupe du bord latéral (52.1) pour couper un premier bord latéral (122.1) de la pièce d'électrode (30.1, 30.2) et une deuxième zone de courbe de coupe du bord latéral (52.3) pour couper un deuxième bord latéral (122.2) de la pièce d'électrode (30.1, 30.2), dans lequel la zone de courbe de coupe du bord coupé (52.2) est disposée entre les zones de courbe de coupe du bord latéral (52.1, 52.3).

3. Dispositif de fourniture des brins d'électrodes (24.1, 24.2) selon l'une quelconque des revendications précédentes, **caractérisé en ce que** la zone de courbe de coupe du bord latéral (52.3) ou au moins l'une des plusieurs zones de courbe de coupe du bord latéral (52.1, 52.3) est configurée pour couper une languette de contact (74) de la pièce d'électrode (30.1, 30.2), comprend une section en forme de U (136) pour couper un contour d'une languette de contact (74) dépassant d'un bord latéral (122.2) et comprend au moins une section droite dans une direction orientée dans la direction de transport (124).

4. Dispositif de fourniture des brins d'électrodes (24.1, 24.2) selon l'une quelconque des revendications précédentes, **caractérisé en ce que** la zone de courbe de coupe du bord coupé (52.2) a un tracé qui dépend du mouvement du support (48) et s'étend en diagonale par rapport à la direction de transport (124), vu depuis une position stationnaire, et est plus longue que ladite au moins une zone de courbe de coupe du bord latéral (52.1, 52.3).

5. Dispositif de fourniture des brins d'électrodes (24.1, 24.2) selon l'une quelconque des revendications précédentes, **caractérisé en ce que** le dispositif de coupe (50) comporte au moins une unité de déviation (90, 90a, 90b) pour le faisceau de coupe.

6. Dispositif de fourniture des brins d'électrodes (24.1, 24.2) selon la revendication 5, **caractérisé en ce que** le dispositif de coupe (50) comporte une première et deuxième unité de déviation (90, 90a, 90b) pour le faisceau de coupe, qui sont disposées l'une derrière l'autre.

7. Dispositif de fourniture des brins d'électrodes (24.1, 24.2) selon l'une quelconque des revendications précédentes, **caractérisé en ce que** le dispositif de transport de substrats d'électrodes (44) comporte un dispositif d'adhérence pour fixer le substrat d'électrode (40) sur le support (48) au moyen d'une liaison adhésive commutable.

8. Dispositif de fourniture des brins d'électrodes (24.1, 24.2) selon l'une quelconque des revendications précédentes, **caractérisé en ce que** le support (48) comporte plusieurs segments de support (86), chacun d'entre eux comportant une surface d'appui (154) pour recevoir au moins une pièce d'électrode (30.1, 30.2) et qui sont mobiles les uns par rapport aux autres dans une première direction orientée dans une direction de transport (124) et dans une deuxième direction orientée perpendiculairement à la surface de support (154), et **en ce que** le support (48) est choisi parmi un groupe comprenant un support (48) qui comporte au moins un élément de commande pour déplacer les segments de support (86) les uns par rapport aux autres en fonction de la position du support; un support (48) qui comporte un dispositif de fixation amovible (156) pour fixer et, si nécessaire, remplacer les segments de support (86), un support (48) qui comporte un dispositif de sollicitation (158) pour solliciter les segments de support (86) dans une direction de déplacement, un support (48) qui comporte au moins un premier disque à came (94a) au niveau d'une première section d'une trajectoire circonférentielle des segments de support (86) et au moins un deuxième disque à came (94b) au niveau d'une deuxième section de la trajectoire des segments de support (86), dans lequel les segments de support (86) sont en contact avec les disques à came (94a, 94b) afin de contrôler leur mouvement relatif, un support (48) qui comporte au moins un entraîneur (162) par segment de support (86) qui est en prise avec le segment de support (86), de sorte que le segment de support (86) peut être entraîné dans la direction de transport (124) par l'entraîneur (162) et est mobile par rapport au segment de support (86) dans la deuxième direction, et un support (48) qui comporte des segments de support (86) avec un dispositif d'adhérence commutable.

9. Procédé de fourniture des brins d'électrodes pour fournir un brin d'électrodes (26.1) dans le but de produire un agencement d'électrodes (12), comprenant:
a) la fourniture d'un substrat d'électrode en forme de bande (40);
b) la fourniture d'une bande séparatrice (28.1, 28.2);
c) la séparation du substrat d'électrode (40) en pièces d'électrode individuelles (30.1, 30.2), comprenant :
c1) le transport du substrat d'électrode (40) sur un support (48) et
c2) couper la pièce d'électrode (30.1, 30.2) à partir du substrat d'électrode en forme de bande (40) pendant le transport en coupant au moins deux bords (122.2, 123) du contour de la pièce d'électrode (30.1, 30.2) sur le support le long d'une courbe de coupe continue (52); et
d) positionner et fixer les pièces d'électrode (30.1, 30.2) sur la bande séparatrice (28.1, 28.2), l'étape c2) comprenant les étapes suivantes:
c2a) couper un bord latéral (122.2) de la pièce d'électrode (30.1, 30.2) s'étendant dans une direction de transport et couper un bord coupé (123) de la pièce d'électrode (30.1, 30.2) s'étendant en diagonale par rapport à la direction de transport dans une opération de coupe avec la courbe de coupe (52) en
i) effectuant l'opération de coupe en continu en passant en continu à travers la courbe de coupe (52) avec un faisceau de coupe ou
ii) effectuant l'opération de coupe (52) en passant à travers une sous-section (52a) de la courbe de coupe (52), laquelle sous-section comprend une transition entre un bord latéral (122.1) et le bord coupé (123), avec un faisceau de coupe dévié au moyen d'une première unité de déviation (90a) et en passant ensuite par la sous-section restante (52b) de la courbe de coupe (52) avec un faisceau de coupe dévié au moyen d'une deuxième unité de déviation (90b),
dans lequel la coupe d'au moins un bord latéral (122.1, 122.2) de la pièce d'électrode (30.1, 30.2) passe à une coupe de bord coupé (123) de manière arquée lorsqu'on observe depuis une position fixe.

10. Procédé de fourniture des brins d'électrodes selon la revendication 9,
**caractérisé en ce que** l'étape c2) comprend au moins l'une des étapes suivantes:
c2b) couper un premier bord latéral (122.1), le bord coupé (123) et un deuxième bord latéral (122.2) de la pièce d'électrode (30.1, 30.2) dans une opération de coupe avec la courbe de coupe (52); et
c2c) couper en continu le long d'une courbe de coupe continue (52).

11. Procédé de fourniture des brins d'électrodes selon la revendication 9 ou 10, **caractérisé en ce que** la coupe d'au moins un bord latéral (122.1, 122.2) de la pièce d'électrode (30.1, 30.2) comprend les étapes suivantes:
11.1 couper au moins une languette de contact (74) de la pièce d'électrode (30.1, 30.2),
11.2 couper un contour en forme de U d'une languette de contact (74) dépassant du bord latéral et
11.3 couper le long d'une section droite (52.1) de la courbe de coupe (52) dans une direction orientée dans le sens de transport (124).

12. Procédé de fourniture des brins d'électrodes selon l'une quelconque des revendications 9 à 11, **caractérisé en ce que** la coupe du bord coupé (123)
12.1 se déroule en fonction du mouvement du support (48) et
12.2 s'effectue en diagonale par rapport à la direction de transport (124) lorsqu'on la regarde depuis une position stationnaire et
12.3 dure plus longtemps que la coupe du ou des bords latéraux (122.1, 122.2).

13. Procédé de fourniture des brins d'électrodes selon l'une quelconque des revendications 9 à 12, **caractérisé en ce que** l'étape c2) comprend:
la déviation d'au moins un faisceau de coupe au moyen d'une première et d'une deuxième unité de déviation (90a, 90b) qui sont disposées l'une derrière l'autre dans le sens de transport, afin de couper des électrodes (14.1) simultanément ou de manière chevauchante dans le temps au moyen des unités de déviation (90a, 90b).

14. Procédé de fourniture des brins d'électrodes selon l'une quelconque des revendications 9 à 13, **caractérisé en ce que** l'étape c1) comprend:
c1a) le placement de sections du substrat d'électrode (40) à séparer les unes des autres par l'étape c2) sur des surfaces de support (154) formées sur plusieurs segments de support (86) du support (48), les segments de support (86) étant mobiles les uns par rapport aux autres dans une première direction orientée dans la direction de transport (124) et dans une deuxième direction orientée perpendiculairement à la surface de support (124), dans lequel le placement et l'étape c2) sont effectués avec des segments de support adjacents (86) rapprochés les uns des autres, et les segments de support adjacents (86) avec des pièces d'électrode (30.1, 30.2) fixées sur ceux-ci sont écartés dans la première et/ou la deuxième direction afin d'effectuer l'étape d), le procédé de fourniture des brins d'électrodes comprenant au moins l'une des étapes suivantes:
14.1 guider les segments de support (86) via au moins un disque à came (94a) au niveau d'une première section d'une trajectoire circonférentielle des segments de support (86) et au moins un deuxième disque à came (86) au niveau d'une deuxième section de la trajectoire des segments de support (86) afin de contrôler le mouvement des segments de support (86) via le parcours des disques à came (94a, 94b); et
14.2 entraîner les segments de support (86) par des entraîneurs respectifs (162) dans la direction de transport (124) et déplacer les segments de support (6) par rapport à l'entraîneur respectif (162) dans la deuxième direction.

15. Procédé de fourniture des brins d'électrodes selon l'une quelconque des revendications 9 à 14, **caractérisé par** la fixation du substrat d'électrode (40) sur un support (48) au moyen d'un dispositif d'adhérence commutable ou par collage.
